(19) **Europäisches Patentamt**

**European Patent Office**

**Office européen des brevets**

(11) **EP 1 165 702 B1**

(12) **EUROPÄISCHE PATENTSCHRIFT**

(45) Veröffentlichungstag und Bekanntmachung des Hinweises auf die Patenterteilung:
**28.04.2004   Patentblatt 2004/18**

(51) Int Cl.[7]: **C09D 5/02**

(21) Anmeldenummer: **00905007.1**

(86) Internationale Anmeldenummer:
**PCT/EP2000/000836**

(22) Anmeldetag: **02.02.2000**

(87) Internationale Veröffentlichungsnummer:
**WO 2000/050519 (31.08.2000 Gazette 2000/35)**

(54) **THERMISCH UND MIT AKTINISCHER STRAHLUNG HÄRTBARE PULVERSLURRY, VERFAHREN ZU IHRER HERSTELLUNG UND IHRE VERWENDUNG**

POWDER-SLURRY THAT CAN BE HARDENED BY ACTINIC RADIATION OR BY THERMAL MEANS, METHOD FOR PRODUCING SAID SLURRY AND USE OF THE SAME

POUDRE EN SUSPENSION DURCISSABLE THERMIQUEMENT OU PAR RAYONNEMENT ACTINIQUE, SON PROCEDE DE PRODUCTION ET SON UTILISATION

(84) Benannte Vertragsstaaten:
**BE DE ES FR GB IT**

(30) Priorität: **25.02.1999   DE 19908018**

(43) Veröffentlichungstag der Anmeldung:
**02.01.2002   Patentblatt 2002/01**

(73) Patentinhaber:
  • **BASF Coatings Aktiengesellschaft**
    **48165 Münster (DE)**
  • **BASF Aktiengesellschaft**
    **67063 Ludwigshafen (DE)**

(72) Erfinder:
  • **OTT, Günther**
    **D-48167 Münster (DE)**
  • **RÖCKRATH, Ulrike**
    **D-48308 Senden (DE)**
  • **MEISENBURG, Uwe**
    **D-47051 Duisburg (DE)**
  • **BAUMGART, Hubert**
    **D-48163 Münster (DE)**

  • **SCHWALM, Reinhold**
    **D-67157 Wachenheim (DE)**
  • **BECK, Erich**
    **D-68526 Ladenburg (DE)**
  • **KÖNIGER, Rainer**
    **D-68199 Mannheim (DE)**
  • **PAULUS, Wolfgang**
    **D-55128 Mainz (DE)**
  • **BINDER, Horst**
    **D-68623 Lampertheim (DE)**
  • **BLUM, Rainer**
    **D-67069 Ludwigshafen (DE)**

(74) Vertreter: **Fitzner, Ulrich, Dr. et al**
    **Dres. Fitzner & Münch**
    **Rechts- und Patentanwälte**
    **Lintorfer Strasse 10**
    **40878 Ratingen (DE)**

(56) Entgegenhaltungen:
    **EP-A- 0 033 896        EP-A- 0 844 286**
    **DE-A- 19 618 657        GB-A- 2 261 664**

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft eine neue thermisch und mit aktinischer Strahlung härtbare Pulverslurry. Außerdem betrifft die vorliegende Erfindung ein neues Verfahren zur Herstellung dieser Pulverslurry. Nicht zuletzt betrifft die Erfindung die Verwendung der neuen Pulverslurry für die Herstellung von Klarlacken für den Automobilsektor und den industriellen Sektor.

Für die Beschichtung von Automobilkarosserien werden heute vorzugsweise Flüssiglacke, d. h. Spritzlacke. verwendet. Diese verursachen zahlreiche Umweltprobleme aufgrund ihres Lösemittelgehaltes. Dies gilt auch für die Fälle der Verwendung von Wasserklarlacken, weil diese noch immer gewisse Mengen an organischen Lösemitteln enthalten.

Thermisch härtbare Wasserklarlacke dieser Art sind aus der deutschen Patentschrift DE-A-196 23 371 bekannt. Direkt nach dem Auftragen trocknen die herkömmlichen Wasserklarlacke nicht als Pulver auf. sondern verfließen zu einem geschlossenen Film. Sie enthalten wässrige Sekundärdispersionen und werden im Automobilsektor für wässrige Mehrschichtlackierungen oder wässrige Einkomponenten- oder Zweikomponenten-Klarlacke eingesetzt, Hierbei werden absetzstabile Dispersionen mit einer mittleren Teilchengröße von ca. 10 bis ca. 200 nm angestrebt. Grund ist die dem Fachmann geläufige Erfahrung, daß Dispersionspartikel um so weniger zum Absetzen neigen, je besser sie stabilisiert sind und je geringer ihre Partikelgröße ist. Für ein sicheres Applikationsverhalten und zur Reduzierung der Kochemeigung ist jedoch die Mirverwendung von bis zu 20 Gew.-% an Lösemitteln notwendig.

Aus diesem Grunde sind in den letzten Jahren vermehrte Anstrengungen unternommen worden. für die Beschichtung Pulverlacke zu verwenden. Die Ergebnisse sind jedoch bisher nicht zufriedenstellend, insbesondere weil zur Erzielung eines gleichmäßigen Aussehens erhöhte Schichtdicken erforderlich sind.

Weitere Probleme von Pulverlacken zur thermischen Härtung ergeben sich aus der Forderung nach Blockfestigkeit bei Lagerung, Lagerbarkeit auch bei Sommertemperaturen. Um diese zu gewährleisten muß der Erweichungspunkt der Lackpulver hoch sein. Wegen des hohen Erweichungspunktes der Lacke setzt dann aber schon beim Aufschmelzen der Pulver auf dem Substrat die thermisch aktivierte Vernetzungsreaktion ein, noch bevor die Lackoberfläche einen optimalen Verlauf erreicht hat.

Zur Lösung dieses Problems werden in den deutschen Patentschriften DE-A-24 36 186 oder DE-A-26 47 700, den europäischen Patentschriften EP-A-0 098 655, EP-A-0 286 594, EP-A-0 410 242, EP-A-0 522 648, EP-A-0 585 742, EP-A-0 636 669 oder EP-A-0 650 979, der internationalen Patentanmeldung WO 93/25596 oder den US-Patentschriften US-A-4,064,161, US-A-4,129,488, US-A-4,163,810. US-A-4,208,3130 oder US-A-5,639,560 UV-härtbare Pulverlacke vorgeschlagen, bei denen eine Trennung des Aufschmelzvorgangs und der Vernetzung möglich ist. Die bisher bekannt gewordenen UV-Pulverlacke basieren alle auf acrylisch oder vinylisch ungesättigten Stoffen, die wegen der für die gute Blockfestigkeit erforderlichen hohen Aufschmelztemperatur auch schon vor der UV-Bestrahlung thermisch polymerisieren können. Um die Blockfestigkeit zu garantieren, müssen für die UV-Pulverlacke absolut lösemittelfreie Polymere als Bindemittel eingesetzt werden, deren Gewinnung wegen deren Neigung zur thermischen Polymerisation sehr problematisch ist.

Es ist indes ein Problem der UV-Pulverlacke, daß sie zur Lackierung dreidimensionaler Objekte nur bedingt geeignet sind, da hierbei Schattenbereiche auftreten, in denen UV-Pulverlacke nicht oder nur zu einem geringen Grad ausgehärtet werden. Gleiches gilt für UV-Pulverlacke, welche deckende Pigmente enthalten.

Man hat versucht, dieses Problem durch Pulverlacke zu lösen, welche thermisch und mit aktinischer Strahlung härtbar sind. Ein solcher sogenannter Dual Cure-Pulverlack ist aus der europäischen Patentschrift EP-A- 0 844 286 bekannt. Er enthält ein ungesättigtes Bindemittel und ein zweites hiermit copolymerisierbares Harz sowie einen Photoinitiator und einen thermischen Initiator und ist somit thermisch und mit aktinischer Strahlung härtbar. Allerdings wird dieser Dual Cure-Pulverlack als pigmentierter Decklack verwendet. welcher an der Oberfläche mit UV-Licht und in den substratnahen Bereichen thermisch gehärtet wird. Ob dieser bekannte Pulverlack auch für die Herstellung von Klarlackschichten in Mehrschichtlackierungen tauglich ist, läßt sich der Patentschrift nicht entnehmen.

Das generelle Problem bei der Anwendung von Pulverlacken, daß sie wegen der abweichenden Applikationstechnologie auf vorhandenen, für Flüssiglacke ausgelegten Anlagen nicht verwendet werden können, wird indes auch durch den Dual Cure-Pulverlack nicht gelöst.

Dieses Problem war der Anlaß thermisch härtbare Pulverlacke in Form wäßriger Dispersionen zu entwickeln, die sich mit Flüssiglacktechnologien verarbeiten lassen. Diese Pulverklarlack-Dispersionen, welche von der Fachwelt auch als Pulverslurries oder Pulverklarlack-Slurries bezeichnet werden, ihre Herstellung und Applikation werden in den deutschen Patentschriften DE 196 13 547, DE 196 17 086, DE 196 18 657, DE 195 40 977 oder DE 195 18 392, der europäischen Patentschrift EP-A- 0 652 264, der internationalen Patentanmeldung WO 80/00447 oder der US-Patentschrift US-A- 4,268,542 beschrieben.

So wird bei dem aus der Patentschrift US-A-4,268,542 bekannten Verfahren, eine Pulverklarlack-Slurry auf Basis von Acrylatharzen verwendet, welche sich für die Beschichtung von Automobilen eignet. Hierbei wird zunächst eine herkömmliche Pulverschicht auf die Karosserie aufgetragen, wonach man die Pulverlack-Dispersion als Klarlack appliziert. Bei dieser Pulverklarlack-Slurry werden ionische Verdicker verwendet, welche zu einer relativ hohen Empfindlichkeit der applizierten Klarlackschicht gegen Feuchtigkeit, insbesondere gegen Schwitzwasser, führen. Außerdem muß mit hohen Einbrenntemperaturen von über 160 °Celsius gearbeitet werden.

Die aus der europäischen Patentschrift EP-A-0 652 264 bekannte Pulverklarlack-Slurry wird hergestellt, indem die festen Bindemittel- und Vernetzerkomponenten und gegebenenfalls Zusatzstoffe und Additive, wie es bei der Pulverlackherstellung üblich ist, zunächst gemeinsam extrudiert und anschließend trocken vermahlen werden, wonach sie in einem weiteren Schritt mit Hilfe von Emulgatoren und Netzmitteln in einer Naßvermahlung in eine Pulverklarlack-Slurry überführt werden.

Diese Pulverklarlack-Slurries können im Gegensatz zu den Pulverklarlacken in konventionellen Naßlackieranlagen verarbeitet werden und lassen sich bei wesentlich niedrigeren Schichtdicken von ca. 40 μm gegenüber ca. 80 μm bei Pulverlacken mit gutem Verlauf und einer den Pulverlacken vergleichbaren Chemikalienfestigkeit applizieren.

Das allgemeine Problem der thermisch aktivierten Vernetzung beim Abdampfen des Wassers und Verschmelzen des resultierenden Pulverlackbelags ist mit dieser Technologie aber noch immer ungelöst, weil die Vernetzung nicht bei einer scharf definierten Temperatur einsetzt, sondern allmählich noch bevor das Wasser vollständig verdampft ist und sich eine optimale Oberfläche ausgebildet hat. Das nach einsetzender Vernetzungsreaktion wegen der erforderlichen hohen Temperaturen noch austretende Wasser ist außerdem die Ursache von Blasen und Kratern.

Aufgabe der vorliegenden Erfindung ist es, eine neue Pulverslurry zur Verfügung zu stellen, welche die Nachteile des Standes der Technik nicht mehr länger aufweist. Im Gegensatz zu den bekannten Wasserklarlacken sollen die neuen Pulverslurries ein sichereres Applikationsverhalten hinsichtlich Kochern bei den geforderten Filmschichtstärken von ca. 40 - 50 μm gewährleisten. Darüber hinaus sollen die neuen Pulverslurries die Vorteile der Belichtung mit aktinischer Strahlung mit denen der thermischen Härtung verbinden, ohne die Nachteile dieser beiden Methoden aufzuweisen, und Lackierungen von hoher chemischer Stabilität liefern.

Demgemäß wurde die neue, thermisch und mit aktinischer Strahlung härtbare Pulverslurry mit

(I) Bestandteilen, welche funktionelle Gruppen (A) enthalten, die sie mit aktinischer Strahlung härtbar machen, und Bestandteilen, welche komplementäre funktionelle Gruppen (B) enthalten, die sie thermisch härtbar machen, im Gewichtsverhältnis von 50 : 1 bis 1 : 50
und/oder mit

(II) Bestandteilen, welche die funktionellen Gruppen (A) und (B), die sie thermisch und mit aktinischer Strahlung härtbar machen, im molaren Verhältnis von 100 : 1 bis 1 : 100 enthalten;

gefunden.

Im folgenden wird die neue, thermisch und mit aktinischer Strahlung härtbare Pulverslurry der Kürze halber als "erfindungsgemäße Slurry" bezeichnet.

Außerdem wurde ein neues Verfahren zur Herstellung einer thermisch und mit aktinischer Strahlung härtbaren Pulverslurry durch Vermischen ihrer Bestandteile in der Schmelze, Vermahlen der resultierenden Mischung zu festen Partikeln, gegebenenfalls gefolgt von der Naßvermahlung der festen Partikel, und Dispergieren der festen Partikel in einer wäßrigen Phase gefunden, bei dem man

(D Bestandteile. welche funktionelle Gruppen (A) enthalten, die sie mit aktinischer Strahlung härtbar machen, und Bestandteile, welche komplementäre funktionelle Gruppen (B) enthalten, die sie thermisch härtbar machen, und/ oder

(II) Bestandteile, welche die funktionellen Gruppen (A) und (B) enthalten, die sie thermisch und mit aktinischer Strahlung härtbar machen

verwendet.

Außerdem wurde ein weiteres neues Verfahren zur Herstellung einer strukturviskosen Pulverslurry durch

1) Emulgieren einer organischen Lösung, enthaltend

1.1) thermisch härtbare Bestandteile und

1.2) mit aktinischer Strahlung härtbare Bestandteile und/oder

1.3) thermisch und mit aktinischer Strahlung härtbare Bestandteile wodurch eine Emulsion vom Typ Öl-in-Wasser resultiert,

2) Entfernen des organischen Lösemittels oder der organischen Lösemittel und

3) teilweisen oder völligen Ersatz des entfernten Lösemittelvolumens durch Wasser, wodurch eine Pulverslurry mit festen sphärischen Partikeln resultiert,

gefunden, bei welchem der Pulverslurry

4) noch mindestens ein ionischer, insbesondere anionischer, Verdicker und mindestens ein nichtionischer Assoziativ-Verdicker zugesetzt wird.

Die technischen Vorteile der erfindungsgemäßen Slurry liegen in der Möglichkeit, die bekannten Vorteile der thermisch härtbaren Pulverslurries-insbesondere die Spritzapplikation - mit denen von UV-Pulverlacken-insbesondere die Trennung des Aufschmelzvorgangs und der Vernetzung - zu verknüpfen. Überraschend hat sich gezeigt, daß eine UV-Härtung bei einem geringen Restwassergehalt des verschmolzenen Films besonders schnell und vollständig erfolgt. Das von der Hydrophilie der vernetzenden Lackfilme abhängige natürliche Gleichgewicht zwischen Wassergehalt im Film und Umgebungsluft stellt sich schon beim Abkühlen rasch ein.

Die erfindungsgemäße Slurry ist mit aktinischer Strahlung härtbar. Im Rahmen der vorliegenden Erfindung ist unter aktinischer Strahlung Elektronenstrahlung oder UV-Strahlung, insbesondere UV-Strahlung, zu verstehen.

Die erfindungsgemäße Slurry enthält funktionelle Gruppen (A), die sie mit aktinischer Strahlung härtbar machen. und funktionelle Gruppen (B), die sie thermisch härtbar machen.

Die funktionellen Gruppen (A) und (B) können dabei in ein und demselben Bestandteil vorliegen. welcher dann sowohl mit aktinischer Strahlung als auch thermisch härtbar ist. Sie liegen dann insbesondere in einem molaren Verhältnis von 100 : 1 bis 1 : 100, bevorzugt 80 : 1 bis 1 : 80, besonders bevorzugt 60 : 1 bis 1 : 60, ganz besonders bevorzugt 40 : 1 bis 1 : 40 und höchst bevorzugt 20 : 1 bis 1 : 20 vor.

Die funktionellen Gruppen (A) und (B) können aber auch in unterschiedlichen Bestandteilen vorliegen, so daß die erfindungsgemäße Slurry mindestens einen Bestandteil, welcher aufgrund seiner funktionellen Gruppen (A) mit aktinischer Strahlung härtbar ist, und mindestens einen Bestandteil, welcher aufgrund seiner komplementären funktionellen Gruppen (B) thermisch härtbar ist, enthält. Erfindungsgemäß ist es von Vorteil, wenn der mit aktinischem Licht härtbare und der thermisch härtbare Bestandteil im Gewichtsverhälmis von 50 : 1 bis 1 : 50, bevorzugt 40 : 1 bis 1 : 40, besonders bevorzugt 30 : 1 bis 1 :30, ganz besonders bevorzugt 20 : 1 bis 1 : 20 und insbesondere 10 : 1 bis 1 : 10 vorliegen.

Erfindungsgemäß ist es hierbei von Vorteil, wenn der mit aktinischer Strahlung härtbare Bestandteil noch funktionelle Gruppen (B) enthält, welche dann das durch die Strahlenhärtung gebildete Netzwerk noch enger mit dem Netzwerk, welches durch die thermische Vernetzung entsteht, verknüpfen.

Die mit thermisch und/oder mit aktinischer Strahlung härtbaren Bestandteile selbst haben in der erfindungsgemäßen Pulverslurry unterschiedliche Funktionen. So kann es sich um Bindemittel, Vernetzungsmittel, Reaktiverdünner oder Additive handeln.

Erfindungsgemäß ist es von Vorteil. wenn es sich bei den thermisch härtbaren Bestandteilen um Bindemittel und Vernetzungsmittel sowie gegebenenfalls Reaktiverdünner handelt und bei den mit aktinischer Strahlung härtbaren Bestandteilen um Bindemittel und Additive sowie gegebenenfalls Reaktiverdünner.

Die thermisch und/oder mit aktinischer Strahlung härtbaren Bestandteile können in den festen Partikeln und/oder in der wäßrigen Phase der erfindungsgemäßen Pulverslurry vorliegen.

Demnach kann die erfindungsgemäße Pulverslurry feste Partikel enthalten, welche thermisch und mit aktinischer Strahlung härtbar sind. Indes kann die erfindungsgemäße Pulverslurry auch feste Partikel, welche lediglich thermisch härtbar sind, und feste Partikel, welche lediglich mit aktinischer Strahlung härtbar sind, enthalten. Hierbei kann die wäßrige Phase zusätzlich weitere Bestandteile, vorzugsweise in Form einer Dispersion und/oder Emulsion, enthalten, welche gleichfalls thermisch und/oder mit aktinischer Strahlung härtbar sind.

In einer weiteren Variante kann die erfindungsgemäße Pulverslurry feste Partikel enthalten, welche ausschließlich thermisch härtbar sind. In diesem Falle muß die wäßrige Phase zusätzlich weitere Bestandteile, vorzugsweise in Form einer Dispersion und/oder Emulsion, enthalten, welche mit aktinischer Strahlung härtbar sind.

In noch einer weiteren Variante kann die erfindungsgemäße Pulverslurry feste Partikel enthalten, welche ausschließlich mit aktinischer Strahlung härtbar sind. In diesem Falle muß die wäßrige Phase zusätzlich weitere Bestandteile, vorzugsweise in Form einer Dispersion und/oder Emulsion, enthalten, welche thermisch härtbar sind.

Bei den letztgenannten Varianten ist darauf zu achten, daß die festen Partikel der erfindungsgemäßen Pulverslurry durch die zu gesetzten thermisch und/oder mit aktinischer Strahlung härtbaren Dispersionen und/oder Emulsionen nicht angegriffen werden. wodurch u. U. die Slurry-Eigenschaften verlorengehen können.

Erfindungsgemäß ist es von Vorteil, wenn die thermisch und/oder mit aktinischer Strahlung härtbaren Bestandteile in den festen Partikeln der erfindungsgemäßen Pulverslurry vorliegen. Weitere besondere Vorteile ergeben sich, wenn in den festen Partikeln thermisch und mit aktinischer Strahlung härtbare Bestandteile vorliegen.

Bei den funktionellen Gruppen (A), welche den Bestandteilen strahlenhärtbare Eigenschaften mitteilen, handelt es sich insbesondere um ethylenisch ungesättigte Gruppen (A) oder um Gruppen (A), welche zur photochemischen H-Abstraktion befähigt sind. Beispiele geeigneter ethylenisch ungesättigter Gruppen (A) sind (Meth)Acrylat-, Vinylether-, Vinylester-, Allyl- oder Vinylaromatengruppen. Ein Beispiel einer geeigneten Gruppe (A), welche zur photochemischen H-Abstraktion befähigt ist, ist die Dihydrodicyclopentadienolgruppe. Erfindungsgemäß sind die Acrylatgruppen von Vorteil, werden deshalb besonders bevorzugt verwendet.

Komplementäre funktionelle Gruppen (B), welche die thermische Vernetzung ermöglichen, können allein in den Bindemitteln vorliegen. In diesem Falle sind Bindemittel selbstvernetzend. Erfindungsgemäß ist es von Vorteil, wenn die komplementären funktionellen Gruppen (B) in den Bindemitteln und den Vernetzungsmitteln enthalten sind. Beispiele geeigneter komplementärer funktioneller Gruppen (B) gehen aus der folgenden Übersicht hervor. In der Übersicht steht die Variable R für einen acyclischen oder cyclischen aliphatischen, einen aromatischen und/oder einen aromatisch-aliphatischen (araliphatischen) Rest, die Variablen $R^1$ und $R^2$ stehen für gleiche oder verschiedene aliphatischen Reste oder sind mit einander zu einem aliphatischen oder heteroaliphatischen Ring verknüpft.

Übersicht: Beispiele komplementärer funktioneller **Gruppen in**

<u>**Bindemittel und Vernetzungsmittel**</u> **oder** <u>**Vernetzungsmittel und Bindemittel**</u>

| | |
|---|---|
| - SH | -C(O)-OH |
| -NH$_2$ | -C(O)-O-C(O)- |
| -OH | -NCO |
| | -NH-C(O)-OR |
| | -CH$_2$-OH |
| | -CH$_2$-O-CH$_3$ |
| | - NH-C(O)-CH(-C(O)OR)$_2$ |
| | - NH-C(O)-CH(-C(O)OR)(-C(O)-R) |
| | - NH-C(O)-NR$^1$R$^2$<br>= Si(OR)$_2$<br>O<br>-CH-CH$_2$ |
| -C(O)-OH | O<br>-CH-CH$_2$ |
| - O-C(O)-CR=CH$_2$ | -OH |
| -O-CR=CH$_2$ | -NH$_2$ |
| | - C(O)-CH$_2$-C(O)-R |
| | -CH=CH$_2$ |

Erfindungsgemäß werden Carboxylgruppen und Epoxidgruppen ganz besonders bevorzugt als komplementäre Gruppen (B) angewandt. Hierbei ist es besonders vorteilhaft, wenn die Carboxylgruppen in den Vernetzungsmitteln und die Epoxidgruppen in den Bindemitteln vorliegen.

Für den Aufbau der erfindungsgemäßen Slurry kommen als thermisch härtbare Bestandteile all diejenigen in Betracht, wie sie auch in den üblichen und bekannten, in deutschen Patentschriften DE 196 13 547, DE 196 17 086, DE 196 18 657, DE 195 40 977 oder DE 195 18 392, der europäischen Patentschrift EP-A- 0 652 264, der internationalen Patentanmeldung WO 80/00447 oder der US-Patentschrift US-A- 4,268,542 beschriebenen Pulverslurries verwendet werden.

In einer vorteilhaften Ausführungsform der erfindungsgemäßen Slurry werden in den festen Partikeln als thermisch härtbare Bestandteile hydroxylgruppenhaltige Bindemittel, insbesondere die nachstehend beschriebenen polymeren Reaktivverdünner, und die nachstehend beschriebenen herkömmlichen Vernetzungsmittel sowie gegenbenenfalls die nachstehend beschriebenen Tris(alkoxycarbonylamino)triazine verwendet.

In einer weiteren vorteilhaften Ausführungsform der erfindungsgemäßen Slurry werden in den festen Partikeln als thermisch härtbare Bestandteile

(1) mindestens ein epoxidhaltiges Bindemittel mit einem Gehalt von, bezogen auf das Bindemittel, 0,5 bis 40 Gew.-% an einpolymerisierten glycidylgruppenhaltigen Monomeren und

(2) mindestens ein Tris(alkoxycarbonylamino)triazin und mindestens eine Polycarbonsäure, insbesondere eine geradkettige Dicarbonsäure, und/oder einen carboxyfunktionellen Polyester als Vernetzungsmittel

oder alternativ

(1) mindestens ein Tris(alkoxycarbonylamino)triazin und mindestens ein oligomeres oder polymeres epoxidhaltiges Vernetzungsmittel mit einem Gehalt von, bezogen auf das Vernetzungsmittel, 0,5 bis 40 Gew.-% an einpolymerisierten glycidylgruppenhaltigen Monomeren und/oder ein niedermolekulares epoxidhaltiges Vernetzungsmittel und

(2) mindestens ein Carboxylgruppen enthaltendes Polymer als Bindemittel enthalten.

Als epoxyfunktionelle Bindemittel (1) sind beispielsweise epoxidgruppenhaltige Polyacrylatharze geeignet, welche durch Copolymerisation von mindestens einem ethylenisch ungesättigten Monomer, das mindestens eine Epoxidgruppe in Molekül enthält, mit mindestens einem weiteren ethylenisch ungesättigten Monomer, das keine Epoxidgruppe im Molekül enthält, herstellbar sind, wobei mindestens eines der Monomere ein Ester der Acrylsäure oder Methacrylsäure ist. Derartige epoxidgruppenhaltige Polyacrylatharze sind beispielsweise aus den Patentschriften EP-A-0 299 420, DE-B-22 14 650, DE-B-27 49 576, US-A-4,091,048 oder US-A-3,781,379 bekannt.

Beispiele geeigneter Monomere, welche keine Epoxidgruppe im Molekül enthalten, sind Alkylester der Acryl- und Methacrylsäure, insbesondere Methylacrylat, Methylmethacrylat, Ethylacrylat, Ethylmethacrylat, n-Butylacrylat, n-Butylmethacrylat, sekundär-Butylacrylat, sekundär-Butylmethacrylat, tert.-Butylacrylat, tert.-Burylmethacrylat, Neopentylacrylat, Neopentylmethacrylat, 2-Ethylhexylacrylat oder 2-Ethylhexylmethacrylat; Amide der Acrylsäure und Methacrylsäure, insbesondere Acrylamid und Methacrylsäureamid; vinylaromatische Verbindungen. insbesondere Styrol, Methylstyrol oder Vinyltoluol; die Nitrile der Acrylsäure und Methacrylsäure; Vinyl- und Vinylidenhalogenide, insbesondere Vinylchlorid oder Vinylidenfluorid; Vinylester, insbesondere Vinylacetat und Vinylpropionat; Vinylether, insbesondere n-Burylvinylether; oder hydroxylgruppenhaltige Monomere, insbesondere Hydroxyethylacrylat, Hydroxyethylmethacrylat, Hydroxypropylacrylat, Hydroxypropylmethacrylat, 4-Hydroxybutylacrylat oder 4-Hydroxybutylmethacrylat.

Beispiele geeigneter epoxyfunktioneller Monomerer sind Glycidylacrylat, Glycidylmethacrylat oder Allylglycidylether.

Das epoxidgruppenhaltige Polyacrylatharz (1) weist üblicherweise ein Epoxidäquivalentgewicht von 400 bis 2500, vorzugsweise 420 bis 700, ein zahlenmittleres Molekulargewicht Mn (gelpermeationschromatographisch unter Verwendung eines Polystyrolstandards bestimmt) von 2000 bis 20000, vorzugsweise 3000 bis 10000, und eine Glasübergangstemperatur Tg von 30 bis 80, vorzugsweise 40 bis 70, besonders bevorzugt 40 bis 60 und insbesondere 48 bis 52 °C (gemessen mit Hilfe der Differential Scanning Calorimetry (DSC)) auf.

Die Herstellung des epoxidgruppenhaltigen Polyacrylatharzes (1) weist keine Besonderheiten auf. sondern erfolgt nach den üblichen und bekannten Polymerisationsmethoden.

Der weitere wesentliche thermisch härtbare Bestandteil ist das Vernetzungsmittel (1) oder (2).

In der hier in Rede stehenden Ausführungsform werden mindestens zwei unterschiedliche Vernetzungsmittel (1) oder (2) angewandt.

Hierbei handelt es sich bei dem ersten Vernetzungsmittel (2) um Tris(alkoxycarbonylamino)triazine und deren Derivate. Beispiele geeigneter Tris(alkoxycarbonylamino)triazine werden in den Patentschriften US-A-4,939,213, US-A-5,084,541 oder der EP-A-0 624 577 beschrieben. Insbesondere werden die Tris(methoxy-, Tris(butoxy- und/ oder Tris(2-ethylhexoxycarbonylamino)triazine verwendet.

Bevorzugt sind die Methyl-Butyl-Mischester, die Butyl-2-Ethylhexyl-Mischester und die Butylester. Diese haben gegenüber dem reinen Methylester den Vorzug der besseren Löslichkeit in Polymerschmelzen.

Die Tris(alkoxycarbonylamino)triazine und deren Derivate können auch im Gemisch mit herkömmlichen Vernetzungsmitteln verwendet werden. Beispiele geeigneter herkömmlicher Vernetzungsmittel sind veretherte Melamin-Formaldehydharze, Benzoguanaminharze, Anhydridgruppen enthaltende Verbindungen oder Harze, Epoxidgruppen enthaltende Verbindungen oder Harze, blockierte und/oder unblockierte Polyisocyanate, beta-Hydroxyalkylamide wie N,N,N',N'-Tetrakis(2-hydroxyethyl)adipamid oder N,N,N',N'-Tetrakis(2-hydroxypropyl)-adipamid, mit Verbindungen mit im Mittel mindestens zwei zur Umesterung befähigten Gruppen, beispeilsweise Umsetzungsprodukte von Malonsäurediester und Polyisocyanaten oder von Estern und Teilestem mehrwertiger Alkohole der Malonsäure mit Monoisocyanaten, wie sie der europäischen Patentschrift EP-A-0 596 460 beschrieben werden.

Derartige Vernetzungsmittel sind dem Fachmann gut bekannt und werden von zahlreichen Firmen als Verkaufsprodukte angeboten.

Die Mitverwendung blockierter Polyisocyanate hat sich als vorteilhaft erwiesen. Beispiele geeigneter blockierter Polyisocyanate werden in den deutschen Patentschriften DE-A-196 17 086 oder 196 31 269, in den europäischen Patentschriften EP-A-0 004 571 oder 0 582 051 oder in der US-Patentschrift US-A-4,444,954 beschrieben.

Bei dem zweiten Vernetzungsmittel (2) handelt es sich um Carbonsäuren, insbesondere gesättigte, geradkettige, aliphatische Dicarbonsäuren mit 3 bis 20 Kohlenstoffatomen im Molekül. An ihrer Stelle oder zusätzlich zu ihnen können auch carboxyfunktionelle Polyester verwendet werden. Ganz besonders bevorzugt wird Dodecan-1,12-dicarbonsäure verwendet.

Um die Eigenschaften der erfindungsgemäßen Pulverlacke und Slurries zu modifizieren, können noch andere Carboxylgruppen enthaltende Vernetzungsmittel in untergeordneten Mengen verwendet werden. Beispiele geeigneter zusätzlicher Vernetzungsmittel dieser Art sind gesättigte verzweigte oder ungesättigte geradkettige Di- und Polycarbonsäuren sowie die nachstehend als Bindemittel (2) im Detail beschriebenen Polymere mit Carboxylgruppen.

In der zweiten Variante der besonders vorteilhaften Ausführungsform können die erfindungsgemäßen Pulverslurries in einer zweiten Variante ein epoxyfunktionelles Vernetzungsmittel (1) und ein Carboxylgruppen enthaltendes Bindemittel (2) enthalten.

Beispiele geeigneter Carboxylgruppen enthaltender Bindemittel (2) sind beispielsweise Polyacrylatharze, welche durch Copolymerisation von mindestens einem ethylenisch ungesättigten Monomer, das mindestens eine Säuregruppe im Molekül enthält, mit mindestens einem weiteren ethylenisch ungesättigten Monomer, das keine Säuregruppen im Molekül enthält. hergestellt werden.

Beispiele gut geeigneter Carboxylgruppen enthaltender Bindemittel (2) sind die nachstehend beschriebenen Polyacrylate und Polymethacrylate mit einem Gehalt an einpolymerisierter Acrylsäure und/oder Methacrylsäure > 0 Gew.-%.

Beispiele geeigneter oligomerer und polymerer epoxyfunktioneller Vernetzungsmittel (1) sind die vorstehend beschriebenen epoxidgruppenhaltigen Bindemittel (1).

Beispiele geeigneter erfindungsgemäß zu verwendender niedermolekularer epoxyfunktioneller Vernetzungsmittel (1) sind niedermolekulare, mindestens zwei Glycidylgruppen enthaltende Verbindungen, insbesondere Pentaerythrittetraglycidylether oder Triglycidylisocyanurat.

Das epoxidgruppenhaltige Bindemittel (1) und das Carboxylgruppen enthaltende Vernetzungsmittel (2) der ersten Variante bzw. das Carboxylgruppen enthaltende Bindemittel (2) und das epoxyfunktionelle Vernetzungsmittel (1) der zweiten Variante der besonders bevorzugten Ausführungsform werden im allgemeinen in einem solchen Verhältnis eingesetzt, daß pro Äquivalent Epoxidgruppen 0.5 bis 1,5, vorzugsweise 0,75 bis 1,25 Äquivalente Carboxylgruppen vorliegen. Die Menge der vorliegenden Carboxylgruppen kann in einfacher Weise durch Titration mit einer alkoholischen KOH-Lösung ermittelt werden.

Erfindungsgemäß enthält das epoxyfunktionelle Bindemittel (1) oder das oligomere oder polymere epoxyfunktionelle Vernetzungsmittel (1) vinylaromatische Verbindungen wie Styrol einpolymerisiert. Um die Gefahr der Rißbildung bei der Bewitterung zu begrenzen, liegt der Gehalt indes nicht über 35 Gew.-%, bezogen auf das Bindemittel (1) oder das Vernetzungsmittel (1). Bevorzugt werden 10 bis 25 Gew.-% einpolymerisiert.

Die erfindungsgemäße Slurry enthält Bestandteile, welche mit aktinischer Strahlung, insbesondere UV-Strahlung härtbar sind. Geeignet sind alle vom UV-Lackgebiet her bekannten strahlenhärtbaren, niedermolekularen, oligomeren und/oder polymeren Verbindungen, vorzugsweise strahlenhärtbare Bindemittel, insbesondere auf Basis ethylenisch ungesättigter Präpolymerer und/oder ethylenisch ungesättigter Oligomerer, gegebenenfalls Reaktivverdünner sowie gegebenenfalls einen oder mehrere Photoinitiatoren. Beispiele geeigneter strahlenhärtbarer Bindemittel sind (meth)acrylfunktionelle (Meth)Acrylcopolymere, Polyetheracrylate, Polyesteracrylate, ungesättigte Polyester, Epoxyacrylate, Urethanacrylate, Aminoacrylate, Melaminacrylate, Silikonacrylate und die entsprechenden Methacrylate.

Bevorzugt werden Bindemittel eingesetzt, die frei von aromatischen Struktureinheiten sind.

Wesentlich ist, daß sie die Glasübergangstemperatur Tg der Partikel der erfindungsgemäßen Slurry nicht soweit erniedrigen, daß die Gefahr ihres Zusammenlaufens entsteht.

Besonders geeignet sind Acrylatharze mit seitenständigen funktionellen Gruppen wie z. B. Epoxidgruppen oder Hydroxygruppen, mit Molekulargewichten im Bereich von Mn 1000 bis 10000 mit Molekulargewichtsverteilungen < 4, wie sie beispielsweise in der DE-A-42 03 278 beschrieben sind, die anschließend mit Acrylsäure oder Acrylsäurederivaten, wie Acrylsäurechlorid, zu den entsprechenden acrylierten Acrylaten umgesetzt werden (EP-A-0 650 979).

Als epoxifunktionelle Vorstufe für die mit aktinischer Strahlung härtbaren acrylierten Acrylate sind beispielsweise epoxidgruppenhaltige Polyacrylatharze geeignet, die durch Copolymerisation von mindestens einem ethylenisch ungesättigten Monomer. das mindestens eine Epoxidgruppe im Molekül enthält, mit mindestens einem weiteren ethylenisch ungesättigten Monomer, das keine Epoxidgruppe im Molekül enthält, herstellbar sind, wobei mindestens eines der Monomere ein Ester der Acrylsäure oder Methacrylsäure ist. Derartige epoxidgruppenhaltige Polyacrylatharze sind z.B. aus den Patentschriften EP-A-299 420, DE-B-22 14 650, DE-B-27 49 576, US-A-4,091,048 und US-A-3.781,379 bekannt.

Als Beispiele für ethylenisch ungesättigte Monomere, die keine Epoxidgruppe im Molekül enthalten, werden Alkylester der Acryl- und Methacrylsäure, die 1 bis 20 Kohlenstoffatome im Alkylrest enthalten, insbesondere Methylacrylat, Methylmethacrylat, Ethylacrylat, Ethylmethacrylat, Butylacrylat, Butylmethacrylat, 2-Ethylhexylacrylat und 2-Ethylhexylmethacrylat genannt. Weitere Beispiele für ethylenisch ungesättigte Monomere, die keine Epoxidgruppen im Molekül enthalten, sind Säureamide, wie z.B. Acrylsäure- und Methacrylsäureamid, Maleinsäureamid (MSA) vinylaromatische Verbindungen, wie Styrol, Methylstyrol und Vinyltoluol, Nitrile. wie Acrylnitril und Methacrylnitril, Vinyl- und Vinylidenhalogenide, wie Vinylchlorid und Vinylidenfluorid, Vinylester, wie z.B. Vinylacetat und hydroxylgruppenhaltige Monomere, wie z.B. Hydroxyethylacrylat und Hydroxyethylmethacrylat.

Die in den epoxidfunktionellen Bindemitteln eingesetzten epoxidfunktionellen Monomere sind vorzugsweise Glycidylacrylat, Glycidylmethacrylat, Allylester und Allylglycidylether.

Das epoxidgruppenhaltige Polyacrylatharz weist üblicherweise ein Epoxidäquivalentgewicht von 400 bis 2500, vorzugsweise 420 bis 700, ein zahlenmittleres Molekulargewicht (gelpermeationschromatographisch unter Verwendung eines Polystyrolstandards bestimmt) von 2.000 bis 20.000, vorzugsweise von 1.000 bis 10.000, und eine Glasübergangstemperatur $T_g$ von 30 bis 80, vorzugsweise von 40 bis 70, besonders bevorzugt von 40 bis 60 °C auf (gemessen mit Hilfe der Differential Scanning Calorimetrie (DSC)). Ganz besonders bevorzugt werden ca. 50 °C. Die Molekulargewichtsverteilungen liegen vorzugsweise unter 6, besonders bevorzugt unter 3. Geeignete Acrylatharze sind z. B. die in der deutschen Patentschrift DE-A-42 03 278 beschriebenen. Zum Einsatz können auch Gemische aus zwei oder mehr Acrylatharzen kommen.

Das epoxidgruppenhaltige Polyacrylatharz kann nach allgemein gut bekannten Methoden durch Polymerisation hergestellt werden.

Daneben können die funktionellen Harze auch aromatische Verbindungen aufweisen. Deren Anteil sollte unter 30 %, vorzugsweise unter 20 % liegen.

Beispielsweise kann es sich um vinylaromatische Verbindungen handeln. Ein Beispiel hierfür ist Styrol.

Weiterhin einsetzbar sind:

- Ungesättigte Polymere verschiedenster Polymertypen mit 0,5 bis 3.5 Doppelbindungen auf ein Molekulargewicht von 1000 Dalton, die durch polymeranaloge Umsetzung von Polymeren mit ungesättigten Stoffen erhalten werden (DE-A-24 36 186).
- Polymethacrylate mit einem niedrigen Molekulargewicht von 500 bis 25.000 Dalton und enger Verteilung, die durch anionische Polymerisation erhalten und durch polymeranaloge Umsetzung mit Doppelbindungen funktionalisiert werden (US-A-4,064,161).
- Blends aus festen Epoxyacrylaten, wie sie durch Umsetzung von Diepoxyharzen mit Acrylsäure erhältlich sind, und teilkristallinen festen Polyesteracrylaten. wie sie aus carboxylterminierten Polyester durch Umsetzung mit Glycidylacrylaten erhältlich sind (US-A-4,129,488).
- Ungesättigte Polyurethanacrylate mit Schmelzbereich von 50 bis 180 °C (EP-A-0 410 242).
- Blends von ungesättigten Polyurethanacrylaten mit ungesättigten kristallinen Polyestern zur Verbesserung der Blockfestigkeit (EP-A-0 585 742)
- Blends von ungesättigten Polyestern oder Polyacrylaten mit Polyurethan-Vinylethem (EP-A-0 636 669).
- Funktionelle Polyacrylate aus olefinisch ungesättigten Monomeren durch Umsetzung funktionell komplementärer Polyacrylate (EP-A-0 650 978).
- Eine Ausführungsform zu EP-A-0 650 978, wobei die Basispolymeren in einer Hochtemperaturpolymerisation hergestellt werden.
- Doppelbindungsfreie Polyacrylate, die über eine H-Übertragung auf photochemisch angeregte, copolymere Fotoinitiatoren vom Norrish-Typ II vernetzt werden können (DE-A-44 13 436).

- Doppelbindungsfreie Polyacrylate mit Dihydrodicyclopentadienolacrylat, die über eine H-Übertragung auf photochemisch angeregte, copolymere Photoinitiatoren vom Norrish-Typ II vernetzt werden können (DE-A-e196 00 147).

Weitere geeigete Beispiele für Bestandteile, die mit aktinischer Strahlung härtbar sind, gehen aus internationalen Patentanmeldungen hervor

- PCT/EP 96/05769:
  Vernetzte polymere Verbindungen mit mindestens einer ethylenischen Doppelverbindung, im Gemisch mit organischen Verbindungen, die mindestens ein H-Atom mit einer Bindungsenergie von max. 397 Kg/mol enthalten; oder

- PCT/EP97/07074:
  Strahlenvernetzbare Acrylatpolymere, welche durch polymeranloge Umsetzung von Polyacrylaten mit Stoffen, durch die eine Gruppe eingeführt wird, die mit aktivischer Strahlung Radikale bildet, herstellbar sind.

Die erfindungsgemäße Slurry enthält mindestens einen der vorstehend beschriebenen Bestandteile.

Die für die UV-Vernetzung benötigten Photoinitiatoren sind in der Regel bereits in den vorstehend beschriebenen Bindemitteln enthalten und werden in der Regel ausgewählt aus den vom Stand der Technik her bekannten Verbindungen. Insbesondere finden Photoinitiatoren vom Norrish II-Typ Verwendung.

Photoinitiatoren dieser Art sind üblich und bekannt. Ihr Wirkungsmechanismus beruht auf einer intramolekularen Variante der Wasserstoff-Abstraktionsreaktionen, wie sie in vielfältiger Weise bei photochemischen Reaktionen auftreten. Beispielhaft sei hier auf Römpp Chemie Lexikon, 9. erweiterte und neubearbeitete Auflage, Georg Thieme Verlag Stuttgart, Bd. 4, 1991, verwiesen.
Ein Beispiel für einen geeigneten Photoinitiator dieser Art ist 4-Hydroxybenzophenon. Es können aber auch Photoinitiatoren für die kationische Polymerisation verwendet werden. Beispielhaft sei hier auf Römpp Lexikon Lacke und Druckfarben. Georg Thieme Verlag Stuttgart, 1998, Seiten 444 bis 446, verwiesen.

Ohne zugesetzte Photoinitiatoren sind Polymere laut DE-A-44 13 436 und DE-A-196 00 147 UV-härtbar. Zu besonders gut vernetzten Filmen führen Mischungen von ungesättigten Polymeren und Polymeren laut DE-A-44 13 436 und DE-A-196 00 147 mit besonders hohem Anteil an photochemisch anregbaren, copolymeren Photoinitiatoren vom Norrish-Typ II.

Erfindungsgemäß ist es von Vorteil, wenn die vorstehend beschriebenen Bestandteile überwiegend oder ausschließlich in den festen Partikeln vorliegen.

Insbesondere die festen Partikel der erfindungsgemäßen Slurry können noch mindestens einen thermisch härtbaren und/oder mindestens einen mit aktinischer Strahlung härtbaren Reaktiverdünner enthalten.

Als thermisch härtbare Reaktiverdünner kommen alle niedermolekularen Verbindungen, Oligomere und Polymere in Betracht, welche mindestens zwei, vorzugsweise mindestens drei primäre und/oder sekundäre Hydroxylgruppen aufweisen und den festen Zustand des erfindungsgemäßen Pulverlacks und der erfindungsgemäßen Slurry nicht zerstören.

Beispiele geeigneter oligomerer und polymerer thermisch härtbarer Reaktiverdünner sind lineare und/oder verzweigte und/oder blockartig, kammartig und/oder statistisch aufgebaute Poly(meth)acrylate, Polyester, Polyurethane, acrylierte Polyurethane, acrylierte Polyester, Polylactone, Polycarbonate, Polyether, (Meth)Acrylatdiole, Polyharnstoffe oder oligomere Polyole.

Werden diese Oligomere und Polymere als thermisch härtbare Reaktiverdünner verwendet, enthalten sie vorzugsweise keine Carboxylgruppen.

Diese Oligomere und Polymere sind dem Fachmann bekannt, und zahlreiche geeignete Verbindungen sind am Markt erhältlich.

Von diesen oligomeren und polymeren thermisch härtbaren Reaktiverdünnern sind die Polyacrylate, die Polyester und/oder die acrylierten Polyurethane von Vorteil und werden deshalb bevorzugt verwendet.

Beispiele für besonders bevorzugte oligomere und polymere thermisch härtbare Reaktiverdünner sind

1. Polyacrylate mit einer Hydroxylzahl von 40 bis 240, vorzugsweise 60 bis 210, insbesondere 100 bis 200, einer Säurezahl von 0 bis 35, Glasübergangstemperaturen von -35 bis + 85 °C und zahlenmittlere Molekulargewichte $M_n$ von 1500 bis 300.000.
Die Glasübergangstemperatur der Polyacrylate wird bekanntermaßen durch Art und Menge der eingesetzten Monomere bestimmt. Die Auswahl der Monomeren kann vom Fachmann unter Zuhilfenahme der folgenden Formel I getroffen werden, nach welcher die Glasübergangstemperaturen näherungsweise berechnet werden können.

$$\frac{1}{Tg} = \sum_{n=1}^{n=x} W_n / Tg_n; \qquad \sum_n W_n = 1 \qquad (I)$$

| Tg = | Glasübergangstemperatur des Polyacrylatharzes |
|---|---|
| $W_n$ = | Gewichtsanteil des n-ten Monomers |
| $Tg_n$ = | Glasübergangstemperatur des Homopolymers aus dem n-ten Monomer |
| x = | Anzahl der verschiedenen Monomeren |

Maßnahmen zur Steuerung des Molekulargewichts (z. B. Auswahl entsprechender Polymerisationsinitiatoren, Verwendung von Kettenübertragungsmitteln oder spezieller Verfahren der Polymerisation usw.) gehören zum Fachwissen und müssen hier nicht näher erläutert werden.

1.1 Besonders bevorzugte Polyacrylate sind herstellbar indem (a1) 10 bis 92, vorzugsweise 20 bis 60 Gew.-%, eines Alkyl- oder Cycloalkylmethacrylats mit 1 bis 18, vorzugsweise 4 bis 13 Kohlenstoffatomen im Alkyl- oder Cycloalkylrest oder Mischungen aus solchen Monomeren, (a2) 8 bis 60, vorzugsweise 12,5 bis 50,0 Gew.-%, eines Hydroxyalkylacrylats oder eines Hydroxyalkylmethacrylats mit 2 bis 4 Kohlenstoffatomen im Hydroxyalkylrest oder Mischungen aus solchen Monomeren, (a3) 0 bis 5, vorzugsweise 0,7 bis 3 Gew.-% Acrylsäure oder Methacrylsäure oder Mischungen aus diesen Monomeren und (a4) 0 bis 50, vorzugsweise bis zu 30 Gew.-%, von von (a1), (a2) und (a3) verschiedenen, mit (a1), (a2) und (a3) copolymerisierbaren ethylenisch ungesättigten Monomeren oder Mischungen aus solchen Monomeren zu Polyacrylaten der vorstehend angegebenen Spezifikation polymerisiert werden.

Beispiele geeigneter (a1)-Komponenten sind Methyl-, Ethyl-, Propyl-, n-Butyl-. Isobutyl-, tert.-Butyl-, Pentyl-, Hexyl-, Heptyl- oder 2-Ethylhexylacrylat oder -methacrylat sowie Cyclohexyl-, tert.-Butylcyclohexyl- oder Isobornylacrylat oder -methacrylat.

Beispiele geeigneter (a2)-Komponenten sind Hydroxyethyl-, Hydroxypropyl- oder Hydroxybutyl- . oder Hydroxymethylcyclohexylacrylat oder -methacrylat oder Addukte von (Meth)Acrylsäure und Epoxiden wie Versaticsäure[R]-glycidylester.

Beispiele geeigneter (a4)-Komponenten sind Vinylaromaten wie Styrol, Vinyltoluol, alpha-Methylstyrol, alpha-Ethylstyrol, kernsubstituierte Diethylstyrole, Isopropylstyrol, Butylstyrol und Methoxystyrole; Vinylether wie Ethylvinylether, n-Propylvinylether, Isopropylvinylether, n-Butylvinylether oder Isobutylvinylether; Vinylester wie Vinylacetat, Vinylpropionat, Vinylbutyrat, Vinylpivalat oder der Vinylester der 2-Methyl-2-ethylheptansäure; oder Allylether wie Trimethylolpropanmono-, -di- oder -triallylether oder ethoxilierter oder propoxilierter Allylalkohol.

1.2 Weitere Beispiele besonders bevorzugter Polyacrylate werden in der europäischen Patentanmeldung EP-A-0 767 185 und den amerikanischen Patentschriften US-A- 5 480 493, 5 475 073 oder 5 534 598 beschrieben.

1.3 Weitere Beispiele besonders bevorzugter Polyacrylate werden unter der Marke Joncryl[R] vertrieben, wie etwa Joncryl[R] SCX 912 und 922,5.

1.4 Weitere Beispiele für besonders bevorzugte Polyacrylate sind solche, welche erhältlich sind, indem (a1) 10 bis 51 Gew.-%, vorzugsweise 25 bis 41 Gew.-%, 4-Hydroxy-n-butylacrylat oder -methacrylat oder eine Mischung hiervon, insbesondere aber 4-Hydroxy-n-butylacrylat, (a2) 0 bis 36 Gew.-%, vorzugsweise 0,1 bis 20 Gew.-%, eines von (a1) verschiedenen hydroxylgruppenhaltigen Esters der Acrylsäure oder der Methacrylsäure oder eines Gemisches hiervon. (a3) 28 bis 85 Gew.-%, vorzugsweise 40 bis 70 Gew.-%, eines von (a1) und (a2) verschiedenen, aliphatischen oder cycloaliphatischen Esters der Methacrylsäure mit mindestens vier Kohlenstoffatomen im Alkoholrest oder eines Gemisches solcher Monomeren. (a4) 0 bis 3 Gew.-%, vorzugsweise 0,1 bis 2 Gew.-%, einer ethylenisch ungesättigten Carbonsäure oder einer Mischung aus solchen Säuren und (a5) 0 bis 20 Gew.-%, vorzugsweise 5 bis 15 Gew.-%, eines von (a1), (a3) und (a4) verschiedenen ungesättigten Monomeren oder einer Mischung aus solchen Monomeren zu einem Polyacrylat mit einer Hydroxylzahl von 60 bis 200, vorzugsweise von 100 bis 160, einer Säurezahl von 0 bis 35 und einem zahlenmittleren Molekulargewicht $M_n$ von 1500 bis 10000 polymerisiert werden, wobei die Zusammensetzung der Komponente (a3) so gewählt wird, daß bei alleiniger Polymerisation dieser Komponente (a3) ein Polymethacrylat einer Glasübergangstemperatur von + 10 bis + 100 °C, vorzugsweise von + 20 bis + 60 °C, erhalten wird.

Beispiele geeigneter Komponenten (a2) sind Hydroxialkylester der Acrylsäure und Methacrylsäure wie Hydroxyethyl- oder Hydroxypropylacrylat oder -methacrylat, wobei die Wahl so zu treffen ist, daß bei alleiniger Polymerisation dieser Komponente (a2) ein Polyacrylat einer Glasübergangstemperatur von 0 bis + 80 °C, vorzugsweise von + 20 bis + 60 °C erhalten wird.

Beispiele geeigneter Komponenten (a3) sind aliphatische Ester der Methacrylsäure mit vier bis 20 Kohlenstoffatomen in Alkoholrest wie n-Butyl -, Isobutyl -, tert. - Butyl -, 2-Ethylhexyl-, Stearyl- und Laurylmethacrylat; oder cycloaliphatische Ester der Methacrylsäure wegen Cyclohexylmethacrylat.

Beispiele geeigneter Komponenten (a4) sind Acrylsäure und/oder Methacrylsäure. Beispiele geeigneter Komponenten (a5) sind vinylaromatische Kohlenwasserstoffe wie Styrol, alpha-Alkylstyrol oder Vinyltoluol; Amide der Acrylsäure und Methacrylsäure wie Methacrylamid und Acrylamid; Nitrile der Acrylsäure und Methacrylsäure; Vinylether oder Vinylester, wobei die Zusammensetzung dieser Komponente (a5) vorzugsweise so zutreffend ist, daß bei alleiniger Polymerisation der Komponenten (a5) ein Polyacrylat mit einer Glasübergangstemperatur von + 70 bis + 120 °C, insbesondere von + 80 bis + 100 °C resultiert.

1.5 Die Herstellung dieser Polyacrylate ist allgemein bekannt und wird beispielsweise in dem Standardwerk Houben-Weyl, Methoden der organischen Chemie, 4. Auflage, Band 14/1, Seiten 24 bis 255, 1961, beschrieben.

2. Polyesterharze, welche herstellbar sind, indem (b1) mindestens eine cycloaliphatische oder aliphatische Polycarbonsäure, (b2) mindestens ein aliphatisches oder cycloaliphatisches Polyol mit mehr als zwei Hydroxylgruppen im Molekül, (b3) mindestens ein aliphatisches oder cycloaliphatisches Diol und (b4) mindestens eine aliphatische, lineare oder verzweigte gesättigte Monocarbonsäure in einem molaren Verhältnis von (b1) : (b2) : (b3) : (b4) = 1,0 : 0,2 bis 1,3 : 0,0 bis 1,1 : 0,0 bis 1,4, vorzugsweise 1,0 : 0,5 bis 1,2 : 0,0 bis 0,6 : 0, 2 bis 0,9 zu einem Polyester oder Alkydharz umgesetzt werden.

Beispiele geeigneter Komponenten (b1) sind Hexahydrophthalsäure, 1,4-Cyclohexandicarbonsäure, Endomethylentetrahydrophthalsäure, Oxalsäure, Malonsäure. Bernsteinsäure, Glutarsäure, Adipinsäure, Pimelinsäure, Korksäure, Azelainsäure oder Sebacinsäure.

Beispiele geeigneter Komponenten (b2) sind Pentaerythrit, Trimethylolpropan. Triethylolethan und Glycerin.

Beispiele geeigneter Komponenten (b3) sind Ethylenglykol, Diethylenglykol. Propylenglykol. Neopentylglykol, 2-Methyl-2-propylpropandiol-1,3, 2-Methyl-2-butylpropandiol-1,3, 2,2,4-Trimethylpentandiol-1,5, 2,2,5-Trimethylhexandiol-1,6, Hydroxypivalinsäureneopentylglykolester oder Dimethylolcyclohexan.

Beispiele geeigneter Komponenten (b4) sind 2-Ethylenhexansäure, Laurinsäure, Isooctansäure, Isononansäure oder Monocarbonsäuremischungen, welche aus Kokosfett oder Palmkernfett gewonnen werden.

Die Herstellung der erfindungsgemäß bevorzugt verwendeten Polyester und Alkydharze ist allgemein bekannt und wird beispielsweise in dem Standardwerk Ullmanns Encyklopädie der technischen Chemie, 3. Auflage, Band 14, Urban & Schwarzenberg, München, Berlin. 1963, Seiten 80 bis 89 und Seiten 99 bis 105, sowie in den Büchern: "Résines Alkydes-Polyesters" von J. Bourry, Paris. Verlag Dunod, 1952, "Alkyd Resins" von C. R. Martens, Reinhold Publishing Corporation, New York, 1961, sowie "Alkyd Resin Technology" von T. C. Patton, Interscience Publishers, 1962, bschrieben.

1. Polyurethane, wie sie in den Patentschriften EP-A-0 708 788, DE-A-44 01 544 oder DE-A-195 34 361 beschrieben werden.

Weitere Beispiele für geeignete thermisch härtbarer Reaktivverdünner sind oligomere Polyole, welche aus oligomeren Zwischenprodukten, die durch Metathesereaktionen von acyclischen Monoolefinen und cyclischen Monoolefinen gewonnen werden, durch Hydroformylierung und anschließender Hydrierung erhältlich sind; Beispiele geeigneter cyclischer Monoolefine sind Cyclobuten, Cyclopenten, Cyclohexen, Cycloocten, Cyclohepten, Norbonen oder 7- Oxanorbonen; Beispiele geeigneter acyclischer Monoolefine sind in Kohlenwasserstoffgemischen enthalten, die in der Erdölverarbeitung durch Cracken erhalten werden ($C_5$-Schnitt); Beispiele geeigneter, erfindungsgemäß zu verwendender oligomerer Polyole weisen eine Hydroxylzahl (OHZ) von 200 bis 450, ein zahlenmittleres Molekulargewicht Mn von 400 bis 1000 und ein massenmittleres Molekulargewicht $M_w$ von 600 bis 1100 auf;

Weitere Beispiele geeigneter thermisch härtbarer Reaktivverdünner sind verzweigte, cyclische und/oder

acyclische $C_9$-$C_{16}$-Alkane, die mit mindestens zwei Hydroxylgruppen funktionalisiert sind, insbesondere Diethyloctandiole, sowie Cyclohexandimethanol, Hydroxypivalinsäureneopentylglykolester, Neopentylglykol, Trimethylolpropan oder Pentaerythrit.

Weitere Beispiele geeigneter thermisch härtbarer Reaktivverdünner sind hyperverzweigte Verbindungen mit einer tetrafunktionellen Zentralgruppe, abgeleitet von Ditrimethylolpropan, Diglycerin, Ditrimethylolethan, Pentaerythrit, Tetrakis(2-hydroxyethyl)methan, Tetrakis(3-hydroxypropyl)methan oder 2,2-Bishydroxymethyl-butandiol-(1,4) (Homopentaerythrit). Die Herstellung dieser Reaktivverdünner kann nach den üblichen und bekannten Methoden der Herstellung hyperverzweigter und dendrimerer Verbindungen erfolgen. Geeignete Synthesemethoden werden beispielsweise in den Patentschriften WO 93/17060 oder WO 96/12754 oder in dem Buch von G. R. Newkome, C. N. Moorefield und F. Vögtle, "Dendritic Molecules, Concepts, Syntheses. Perspectives", VCH, Weinheim, New York. 1996, beschrieben.

Als strahlenhärtbare Reaktivverdünner kommen niedermolekulare polyfunktionelle ethylenisch ungesättigte Verbindungen in Betracht. Beispiele geeigneter Verbindungen dieser Art sind Ester der Acrylsäure mit Polyolen, wie Neopentylglykoldiacrylat, Trimethylolpropantriacrylat, Pentaerythrittriacrylat oder Pentaerythrittetraacrylat; oder Umsetzungsprodukte von Hydroxyalkylacrylaten mit Polyisocyanaten, insbesondere aliphatischen Polyisocyanaten.

Von den vorstehend beschriebenen erfindungsgemäß zu verwendenden thermisch härtbaren Reaktiverdünnern sind die carboxylgruppenfreien Polyacrylate und Polymethacrylate, welche vorstehend unter der Ziffer 1.1 beschrieben werden, von ganz besonderem Vorteil und werden deshalb ganz besonders bevorzugt verwendet.

Die festen Partikel der erfindungsgemäßen Slurry können einen oder mehrere geeignete Katalysatoren für die Aushärtung der Epoxidharze enthalten. Beispiele geeigneter Katalysatoren sind Phosphonium- und Tetraalkylammoniumsalze organischer und anorganischer Säuren, Amine. Imidazol und Imidazolderivate. Die Katalysatoren werden im allgemeinen in Mengen von 0,001 bis 2 Gew.-%, bezogen auf das Gesamtgewicht der Epoxidgruppen enthaltenden Bestandteile sowie der Carboxylgruppen enthaltenden Bestandteile, verwendet.

Beispiele geeigneter Phosphoniumsalze sind Ethyltriphenylphosphoniumiodid, Ethyltriphenylphosphoniumchlorid, Ethyltriphenylphosphoniumthiocyanat, Ethyltriphenylphosphonium-Acetat-Essigsäurekomplex, Tetrabutylphosphoniumiodid, Tetrabutylphosphoniumbromid oder Tetrabutylphosphonium-Acetat-Essigsäurekomplex. Diese und andere geeignete Phosphonium-Katalysatoren werden beispielsweise in den Patentschriften US-A-3,477,990 oder der US-A-3,341,580 beschrieben.

Beispiele geeigneter Tetraalkylammoniumsalze sind Cetyltrimethylammoniumund Dicetyldimethylammoniumbromid.

Beispiele geeigneter Imidazol-Katalysatoren sind 2-Styrylimidazol, 1-Benzyl-2-methylimidazol, 2-Methylimidazol oder 2-Butylimidazol. Diese und weitere geeignete Imidazol-Katalysatoren werden in dem belgischen Patent Nr. 756,693 beschrieben.

Die festen Partikel der erfindungsgemäßen Slurry können neben den vorstehend beschriebenen wesentlichen Bestandteilen Additive enthalten, wie sie in Klarlacken üblicherweise verwendet werden. Hierbei ist es wesentlich, daß diese Additive die Glasübergangstemperatur Tg der Bindemittel nicht wesentlich absenken.

Beispiele geeigneter Additive sind Katalysatoren für die Vernetzung, Entschäumer, Haftvermittler, Additive zur Verbesserung der Untergrundbenetzung, Additive zur Verbesserung der Oberflächenglätte, Mattierungsmittel, Lichtschutzmittel, vorzugsweise UV-Absorber wie Hydroxyphenyltriazine oder HALS wie (Bis(1-alkyloxy-2,2,6,6-tetramethyl-4-piperidyl)sebacate, Korrosionsinhibitoren, Biozide, Flammschutzmittel oder Polymerisationsinhibitoren, wie sie in dem Buch "Lackadditive" von Johan Bielemann, Wiley-VCH, Weinheim. New York, 1998, im Detail beschrieben werden.

In der erfindungsgemäßen Slurry, insbesondere in ihren festen Partikeln, kann das Verhältnis von thermisch vernetzbaren Bestandteilen zu mit aktinischer Strahlung vernetztbaren Bestandteilen vorzugsweise innerhalb der vorstehend angegebenen Grenzen breit variieren. Es richtet sich in erster Linie danach, ob die erfindungsgemäße Slurry in erster Linie thermisch oder in erster Linie mit aktinischer Strahlung härtbar sein soll, sowie nach dem Verwendungszweck der erfindungsgemäßen Slurry. So wird man eine erfindungsgemäße Slurry, welche in erster Linie mit aktinischer Strahlung härtbar ist, bereitstellen, wenn man Substrate beschichten will. die thermisch nur gering belastbar sind. Der Fachmann kann daher in jedem Einzelfall das geeignete Verhältnis aufgrund seines Fachwissens gegebenenfalls unter Zuhilfenahme einfacher Vorversuche ermitteln.

Die erfindungsgemäße Slurry enthält, bezogen auf ihre Gesamtmenge, die festen Partikel in einer Menge von 5 bis 80, vorzugsweise 10 bis 70, besonders bevorzugt 15 bis 60 und insbesondere 20 bis 50 Gew.-%.

Die Herstellung der erfindungsgemäßen festen Partikel weist keine verfahrenstechnischen Besonderheiten auf, sondern erfolgt nach den bekannten Methoden, wie sie beispielsweise in der Produkt-Information der Firma BASF Lacke + Farben AG "Pulverlacke", 1990, beschrieben werden, durch Homogenisieren und Dispergieren beispielsweise mittels eines Extruders oder Schneckenkneters. Nach ihrer Herstellung werden die erfindungsgemäßen festen Partikel oder Pulverlacke durch Vermahlen sowie gegebenenfalls durch Sichten und Sieben für die Dispergierung vorbereitet.

Zur Herstellung der Dispersion, d. h. erfindungsgemäßen Slurry, erfolgt eine Dispergierung der festen Partikel in einer wässrigen Phase. Die kontinuierliche Phase ist demgemäß vorzugsweise Wasser. Ggf. enthält die wäßrige Phase weitere Bestandteile, durch die die festen Partikel dispergiert und die erfindungsgemäße Slurry stabilisiert wird. Durch weitere Hilfsstoffe können die erforderlichen anwendungstechnischen Eigenschaften hergestellt werden.

In der wäßrigen Phase können ionische und/oder nichtionische monomere und/oder polymere Tenside und Schutzkolloide enthalten sein. Die Auswahl erfolgt dabei unter Berücksichtigung der lacktechnischen Anforderungen an die gehärteten Filme.

Als günstig hat sich die Verwendung von polymeren Stoffen erwiesen, die den Bestandteilen der festen Partikel chemisch ähnlich sind und bei der Härtung mit aktinischer Strahlung und/oder der thermischen Härtung mit den in den festen Partikeln enthaltenen Bindemitteln covernetzen können.

Stoffe dieser Art sind z. B. für die erfindungsgemäße Slurry Polymere auf Basis von Polyacrylaten Polyacrylatschutzkolloide, die aus (Meth)-Acrylaten durch Copolymerisation mit (Meth)-Acrylsäure erhalten werden und bei denen ein Teil der Carboxylgruppen mit Glycidyl(meth)acrylat umgesetzt und ein weiterer Teil mit Stickstoffbasen neutralisiert wurde.

Besonders geeignet sind auch doppelbindungsfreie Bindemittel laut z. B. DE 44 13 436 und/oder DE 196 00 147, die mit Anteilen von (Meth)Acrylsäure polymerisiert wurden und die dann ganz oder zum Teil mit Stickstoffbasen neutralisiert wurden. Auch die Verwendung bindemittelähnlicher Dispergatoren, die basische Gruppen aufweisen und mit Säuren (teil)neutralisiert wurden, ist erfindungsgemäß bevorzugt. Ein weiterer Vorzug der vorliegenden Erfindung besteht darin, sowohl kationische als auch anionische Stabilisierungen frei wählen zu können und z. B. das kostengünstigste oder chemisch leicht durchzuführende Prinzip wählen zu können, ohne, daß auf die Chemie der Vernetzungsreaktion Rücksicht genommen werden muß. So sind z. B. die Bindemittel nach DE 44 13 436 und DE 196 00 147 gegen die meisten chemischen Reaktionen inert und werden nur durch energiereiche Bestrahlung vernetzt. Solche Systeme lassen sich dann durch konventionelle Powderslurryverfahren auf verschiedene Substrate auftragen und bei höherer Temperatur (oberhalb der Schmelztemperatur des Harzes) durch UV- oder Elektronenstrahlung härten.

Für die erfindungsgemäße Slurry auf Basis von Polyurethanen sind Polyurethanschutzkolloide besonders geeignet, die aus Isocyanaten, Polyolen, Hydroxycarbonsäuren und Hydroxy-(meth)acrylaten und/oder Hydroxyvinylethern erhalten und mit Stickstoffbasen (teil-)-neutralisiert werden. Die genannten Schutzkolloide haben eine gute dispergierende und häufig auch erwünschte verdickende Wirkung und werden bei der UV-Härtung mit den verschmolzenen Pulverteilchen covernetzt, woraus außergewöhnlich wetterbeständige Lackierungen resultieren.

Es kommen aber auch kommerziell zugängliche Stoffe in Frage, wie anionische und kationische Seifen, nichtionische Tenside z. B. aus Basis von Polyoxyethylen/-propylen-Blockpolymeren oder Polyoxyethylenfettsäureestern. Geeignet sind auch Polyvinylpyrrolidon- und Polyvinylalkohol-Schutzkolloide, die gut stabilisierend und verdickend wirken. Die Auswahl und ggf. die Kombination von verschiedenen Stoffen ist eine Optimierungsaufgabe, die dem Fachmann bekannt ist und erfolgt im Einzelfall nach den Anforderungen an die Dispersion, z. B. was Pumpfähigkeit, Fließverhalten, Viskosität oder Lagerbedingungen betrifft oder den Anforderungen an den gehärteten Lack, z. B. bezüglich Wetterbeständigkeit, Überlackierbarkeit, Glanz und Zwischenhaftung.

Als weiteren wesentlichen Bestandteil enthält die wässrige Phase der erfindungsgemäßen Slurry wenigstens einen nicht-ionischen Verdicker. Bevorzugt werden nichtionische Assoziativ-Verdicker eingesetzt. Das gilt insbesondere, wenn pH-Werte von 4-7 einzuhalten sind.

Strukturmerkmale solcher Assoziativ-Verdicker sind ein hydrophiles Gerüst, das eine ausreichende Wasserlöslichkeit sicherstellt und hydrophobe Gruppen, die zu einer assoziativen Wechselwirkung im wäßrigen Medium fähig sind.

Als hydrophobe Gruppen werden beispielsweise langkettige Alkylreste, wie z.B. Dodecyl-, Hexadecyl- oder Octadecyl-Reste, oder Alkarylreste. wie z.B. Octylphenyl- oder Nonylphenyl-Reste eingesetzt. Als hydrophile Gerüste werden vorzugsweise Polyacrylate. Celluloseether oder besonders bevorzugt Polyurethane eingesetzt, die die hydrophoben Gruppen als Polymerbausteine enthalten.

Ganz besonders bevorzugt sind als hydrophile Gerüste Polyurethane, die Polyetherketten als Bausteine enthalten, vorzugsweise aus Polyethylenoxid.

Bei der Synthese solcher Polyetherpolyurethane dienen die Di- und oder Polyisocyanate, bevorzugt aliphatische Diisocyanate, besonders bevorzugt ggf. alkylsubstituiertes 1,6-Hexamethylendiisocyanat, zur Verknüpfung der hydroxylgruppenterminierten Polyetherbausteine untereinander und zur Verknüpfung der Polyetherbausteine mit den hydrophoben Endgruppenbausteinen, die beispielsweise monofunktionelle Alkohole und/oder Amine mit den schon genannten langkettigen Alkylresten oder Arylalkylresten sein können.

Eine besonders bevorzugte Ausführung betrifft nichtionische Assoziativ-Verdicker. die photochemisch mit sich selbst und/oder den übrigen mit aktinischer Strahlung härtbaren Bestandteilen reagieren können, wodurch eine weitere Verbesserung der Lackeigenschaften erreicht wird. Mit aktinischer Strahlung härtbare nichtionische Assoziativ-Verdicker lassen sich erhalten durch Einbau von Doppelbindungen oder Gruppen mit leicht abstrahierbaren H-Atomen, wie Dicyclopentadienylgruppen und/oder Photoinitiatorgruppen vom Norrish II-Typ, insbesondere Benzophenongruppen.

Die nichtionischen Verdicker können in Kombination mit ionischen Verdickern verwendet werden. Diese enthalten üblicherweise anionische Gruppen und basieren insbesondere auf speziellen Polyacrylatharzen mit Säuregruppen, die teilweise oder vollständig neutralisiert sein können. Beispiele geeigneter ionischer Verdicker sind aus dem Lehrbuch "Lackadditive" von Johan Bielemann, Wiley-VCH, Weinheim, New York. 1998, Seiten 31 bis 65, bekannt.

Diese Kombination von nichtionischen Verdickern und ionischen Verdickern wird insbesondere dann angewandt, wenn die erfindungsgemäße Slurry ein strukturviskoses Verhalten aufweisen soll.

Die Menge der zuzusetzenden Verdicker und das Verhältnis von ionischem zu nichtionischem Verdicker richtet sich nach der gewünschten Viskosität der erfindungsgemäßen Slurry, die wiederum von der benötigten Absetzstabilität und den speziellen Bedürfnissen der Spritzapplikation vorgegeben werden. Der Fachmann kann daher die Menge der Verdicker und das Verhältnis der Verdicker-Typen zueinander anhand einfacher Überlegungen gegebenenfalls unter Zuhilfenahme von Vorversuchen ermitteln.

Erfindungsgemäß wird ein Viskositätsbereich von 50 bis 1500 mPas bei einer Scherrate von 1000 $s^{-1}$ und von 150 bis 8000 mPas bei einer Scherrate von 10 $s^{-1}$ sowie von 180 bis 12000 mPas bei einer Scherrate von 1 $s^{-1}$ eingestellt.

Dieses als "strukturviskos" bekannte Viskositätsverhalten beschreibt einen Zustand, der einerseits den Bedürfnissen der Spritzapplikation und andererseits auch den Erfordernissen hinsichtlich Lager- und Absetzstabilität Rechnung trägt: Im bewegten Zustand, wie beispielsweise beim Umpumpen der erfindungsgemäßen Slurry in der Ringleitung der Lackieranlage und beim Versprühen, nimmt die erfindungsgemäße Slurry einen niederviskosen Zustand ein, der eine gute Verarbeitbarkeit gewährleistet. Ohne Scherbeanspruchung hingegen steigt die Viskosität an und gewährleistet auf diese Weise, daß der bereits auf dem zu lackierenden Substrat befindliche Lack eine verringerte Neigung zum Ablaufen an senkrechten Flächen zeigt ("Läuferbildung"). In gleicher Weise führt die höhere Viskosität im unbewegten Zustand, wie etwa bei der Lagerung, dazu. daß ein Absetzen der festen Partikel größtenteils verhindert wird oder ein Wiederaufrühren der während der Lagerzeit nur schwach abgesetzten erfindungsgemäßen Pulverslurry gewährleistet ist.

Die erfindungsgemäße Slurry kann ferner Dispergierhilfsmittel enthalten. Beispiele sind u. a Aryl-Polyglycolether, Octylphenolethocylate ( teilweise hydriert).

Zu den bevorzugt in Komponente B einsetzbaren Dispergierhilfsmitteln zählen u. a. Polyurethane.

Diese können vorzugsweise aus

1. wenigstens einer organischen Komponente mit wenigstens zwei reaktiven Wasserstoffatomen,
2. einem monofunktionalen Ether und
3. einem Polyisocyanat

bestehen.

Die organische Komponente der Polyurethanzusammensetzung umfaßt ein Polyesterpolyol, ein niedermolekulares Diol und/oder Triol oder Gemische davon.

Ggfs. kann ein trifunktionales Hydroxylgruppen enthaltendes Monomer eingesetzt werden.

In einer zweiten bevorzugten Ausführungsform umfaßt das Polyurethan

1. wenigstens eine organische Komponente mit wenigstens zwei reaktiven Wasserstoffatomen,
2. einen nicht-ionischen Stabilisator der hergestellt wird durch Reaktion

    2.1 eines monofunktionalen Polyethers mit einer Polyisocyanat enthaltenden Komponente zur Erzeugung eines Isocyanatzwischenproduktes und
    2.2 einer Komponente mit wenigstens einer aktiven Amin- und wenigstens zwei aktiven Hydroxylgruppen und

3. wenigstens einer Polyisocyanat enthaltenden Komponente.

Die organische Komponente umfaßt vorzugsweise Polyetherpolyesterpolyol, ein niedermolekulares Diol und/oder Triol oder Gemische davon.

Die Polyesterkomponente kann hergestellt werden durch Reaktion wenigstens einer Dicarbonsäure und wenigstens einer Alkoholkomponente, wobei der Alkohol wenigstens zwei Hydroxylgruppen enthält. Die Carbonsäurekomponente enthält zwei oder mehr Carboxylgruppen.

Zusätzlich zu den Carbonsäuren kann das Polyesterharz auch ein oder mehr niedermolekulare Diole oder Triole enthalten. Einsetzbar ist grundsätzlich jedes Polyol.

Die eingesetzten Polyesterharze oder Gemische der Polyesterharze enthalten vorzugsweise endständige Hydroxylgruppen. Dies wird bewirkt durch Zusatz eines Überschusses an Polyolen.

Zur Synthese der Polyester können sowohl Monocarbonsäuren als auch Monoalkohole eingesetzt werden.

Vorzugsweise sind die Monocarbonsäuren und/oder Monoalkohole jedoch in einer sehr geringen Gewichtsmenge in dem Polyesterharz enthalten.

Die vorzugsweise eingesetzten Polyesterdiolkomponenten umfassen zwischen 20 und 80 Gew.-% des Polyurethanharzes. Vorzugsweise liegen die Mengen zwischen 50 und 70 Gew.-%. Ganz besonders bevorzugt werden 55 bis 65 Gew.-%.

Zur Herstellung des Polyurethans werden Polyesterpolyole mit einem Molekulargewicht zwischen 500 und 5000 eingesetzt. Bevorzugt werden Molekulargewichte zwischen 1000 und 3500.

Zusätzlich zu den Polyesterdiolen können die Polyurethanharze weitere organische Komponenten mit wenigstens zwei reaktiven Wasserstoffatomen enthalten. Hierbei handelt es sich vorzugsweise um Diole und Triole, Thiole und/oder Amine oder Gemische dieser Stoffe. Die Komponenten, die zur Synthese der Polyesterkomponente eingesetzt werden. können auch als separate Komponenten hier zum Einsatz kommen. D.h., als zusätzliche organische Komponente in dem Polyurethan kommen auch Di- oder Trialkohole, wie z.B. Neopentylglykol oder 1,6-Hexandiol in Betracht.

Das Molekulargewicht der eingesetzten Diole und/oder Triole in dem Polyurethanharz liegt zwischen 0 und 20 Gew.-%. Bevorzugt werden 1 bis 6 Gew.-%.

Das Polyurethanharz enthält ferner Polyisocyanate, insbesondere Diisocyanate. Die Isocyanate liegen zwischen 5 und 40 Gew.-% bezogen auf die Polyurethanmasse. Besonders bevorzugt werden 10 bis 30 Gew.-% und ganz besonders 10 bis 20 Gew.-%. Zur Herstellung des Polyurethans wird schließlich ein monofunktioneller Polyether eingesetzt.

In einer zweiten Variante wird ein nicht-ionischer Stabilisator hergestellt, in dem vorzugsweise ein monofunktionaler Polyether mit einem Diisocyanat zur Reaktion gebracht wird. Das entstandene Reaktionsprodukt wird sodann mit einer Komponente umgesetzt, die wenigstens eine aktive Aminogruppe und wenigstens zwei aktive Hydroxylgruppen enthält.

In einer besonderen Ausführungsform umfaßt das Polyurethan ein Reaktionsprodukt aus:

1. Einem Polyesterpolyol, welches seinerseits ein Reaktionsprodukt aus einer Carbonsäure mit wenigstens zwei Carboxylgruppen und einer Komponente mit wenigstens zwei Hydroxylgruppen,
2. wenigstens einer niedermolekularen Komponente mit wenigstens zwei Hydroxylgruppen,
3. wenigstens einer polyisocyanathaltigen Komponente,
4. einem nicht-ionischen Stabilisator, hergestellt durch Reaktion eines monofunktionalen Ethers mit einem Polyisocyanat und anschließender Umsetzung des erhaltenen Reaktionsprodukts mit einer Komponente, die wenigstens eine aktive Amin- und wenigstens zwei aktive Hydroxylgruppen enthält.

In einer vierten Variante umfaßt das Polyurethan ein Reaktionsprodukt aus

1. einem Polyesterpolyol,
2. wenigstens einem niedermolekularen Diol oder Triol,
3. einem Polyisocyanat,
4. einem Trihydroxygruppen enthaltenden Monomer und
5. einem monofunktionalen Hydroxygruppen enthaltenden Polyether.

Die Polyester werden synthetisiert mit den oben beschriebenen Carboxylsäurekomponenten und einem Überschuß an Polyolen. Der Überschuß an Polyolen wird so gewählt, daß vorzugsweise endständige Hydroxylgruppen entstehen. Die Polyole haben vorzugsweise eine Hydroxylfunktionalität von wenigstens zwei.

Das Polyesterharz besteht vorzugsweise aus einem oder mehreren Polyolen, vorzugsweise aus einem Diol. Vorzugsweise eingesetzte Diole sind Alkylenglykole, wie Ethylenglykol, Propylenglykol, Butylenglykol und Neopentylglykol, 1,6-Hexandiol oder andere Glykole, wie Bisphenol-A, Cyclohexandimethanol, Caprolactondiol, hydroxyalkyliertes Bisphenol und ähnliche Verbindungen.

Die niedermolekularen vorzugsweise erfindungsgemäß eingesetzten Diole sind aus dem Stand der Technik bekannt. Hierzu zählen aliphatische Diole, vorzugsweise Alkylenpolyole mit 2 bis 18 Kohlenstoffatomen. Beispiele hierfür sind 1,4-Butandiol, cycloaliphatische Diole, wie 1,2-Cyclohexandiol und Cyclohexandimethanol.

Als organische Polyisocyanate kommen erfindungsgemäß vorzugsweise solche in Betracht, die wenigstens zwei Isocyanatgruppen umfassen. Insbesondere werden die Isocyanate bevorzugt, z.B. p-Phenylendiisocyanate, Biphenyl 4,4'-Düsocyanate, Toluoldiisocyanate, 3,3'-Dimethyl-4,4 Biphenylendiisocyanate, 1,4-Tetramethylendiisocyanate, 1,6-Hexamethylendiisocyanate, 2,2,4-Trimethylhexan-1,6-Diisocyanate, Methylen-bis-(phenylisocyanate), 1,5-Naphthalendiisocyanate, Bis(isocyanatoethylfumarate), Isophorondiisocyanate und Methylen-bis-(4-Cyclohexylisocyanate).

Neben den genannten Diisocyanaten werden auch andere multifunktionale Isocyanate verwendet. Beispiele sind 1,2,4 Benzentriisocyanate und Polymethylenpolyphenylisocyanate.

Besonders bevorzugt ist der Einsatz von aliphatischen Diisocyanaten, z.B. 1,6-Hexamethylendiisocyanat. 1,4-Butylendiisocyanat, Methylen-bis(4-cyclohexylisocyanat) und Isophorondiisocyanat.

Längerkettige Polyurethanharze können erhalten werden durch Kettenverlängerung mit diol- und/oder triolgruppenenthaltenden Komponenten. Besonders bevorzugt werden Kettenverlängerungsmittel mit wenigstens zwei aktiven Hydrogengruppen, z.B. Diolen, Thiolen, Diaminen oder Gemischen dieser Stoffe, z.B. Alkanolaminen, Aminoalkylmercaptanen, Hydroxyalkylmercaptanen und ähnlichen Verbindungen.

Beispiele für als Kettenverlängerungsmittel eingesetzte Diole sind 1,6-Hexandiol, Cyclohexandimethylol und 1,4-Butandiol. Ein besonders bevorzugtes Diol ist Neopentylglykol.

Die einsetzbaren Polyether sind vorzugsweise mono- oder difunktionelle Polyether. Zu den monofunktionellen zählen beispielsweise solche, die hergestellt werden durch Polymerisation von Ethylenoxiden. Propylenoxiden oder Gemischen hiervon.

Das beschriebene Polyurethanprodukt kann mit den vorstehend beschriebenen Vernetzungsmitteln für die thermische Vernetzung vermischt werden. Vorzugsweise werden die Aminoplastharze, z.B. Melaminharze, verwendet. Ebenso können Kondensationsprodukte anderer Amine und Amide eingesetzt werden, z.B. Aldehydkondensate von Triazinen, Diazinen, Triazolen, Guanidinen, Guanaminen oder alkyl-und arylsubstituierte Derivate solcher Komponenten. Einige Beispiele solcher Komponenten sind N,N'-Dimethylharnstoff, Dicyandiamide, 2-Chloro-4,6-Diamino-1,3,5-Triazine, 6-Methyl-2,4-Diamino-,1,3,5-Triazine, 3,5-Diamino-Triazole, Triaminopyrimidine, 2-Mercapto-4,6-Diaminopyrimidine, 2,4,6-Triethyltriamino-1,3,5-Triazine und ähnliche Stoffe.

Als Aldehyd kommen vorzugsweise Formaldehyde in Betracht. Ebenso können Acetaldehyde, Crotonaldehyde, Acrolein, Benzaldehyde, Furfural zum Einsatz kommen.

Die Amin-Aldehydkondensationsprodukte können Methylol oder ähnliche Alkoholgruppen enthalten. Beispiele für einsetzbare Alkohole sind Methanol, Ethanol, Propanol, Butanol, Pentanol, Hexanol, Heptanol, Benzylalkohol und aromatische Alkohole, cyclische Alkohole, wie Cyclohexanol, Monoether oder Glykole sowie substituierte Alkohole, z.B. 3-Chloropropanol.

Die beschriebenen Vernetzungsmittel sind in der Polyurethandispersion in Mengen von 2 bis 15 Gew.-%, vorzugsweise 4 bis 8 Gew.-% vorhanden.

Das erhaltene Polyurethan kann in der erfindungsgemäßen Slurry mit einem Anteil von 2 bis 20 Gew.-%, vorzugsweise 5 bis 15 Gew.-% vorhanden sein.

Aus den festen Partikeln und der wäßrigen Phase kann durch Naßvermahlung oder durch Einrühren der trocken vermahlenen festen Partikel die erfindungsgemäße Slurry hergestellt werden. Besonders bevorzugt wird die Naßvermahlung.

Besonders bevorzugt wird die Naßvermahlung einer Vordispersion. Dazu werden die festen Partikel vor oder nach den vorstehend beschriebenen Hilfsstoffen und Additiven in Wasser eindispergiert, z. B. unter einem schnelllaufenden Dissolver. Es ist auch möglich, Additive und Hilfsstoffe zunächst nur teilweise zuzugeben und vor oder nach einer Nachdispergierung und/oder Naßvermahlung nachzudosieren. In bestimmten Fällen ist die Vordispergierung direkt verarbeitbar, in der Regel wird sie zur Einstellung der erwünschten Feinteiligkeit in geeigneten Mühlen, z. B. Rührwerkskugelmühlen nachvermahlen. Nach der Dispergierung wird ggf. auf ein gewünschtes Korngrößenspektrum vermahlen. ggf. der pH-Wert auf den in Abhängigkeit des Systems ermittelte Wert eingestellt und filtriert. Ein spezieller Vorteil der erfindungsgemäßen Pulverslurry, im Vergleich zu Pulverlacken, liegt darin, daß auch ein sehr feinteiliges Korngrößenspektrum verarbeitet werden kann, z. B. mit 1-3 µm, bei dem Pulverlacke nicht mehr applizierbar sind, mit dem Resultat einer Oberflächengüte (Verlauf) die mit Pulvern nicht erreichbar ist.

Nach der Dispergierung der festen Partikel in der wäßrigen Phase wird der pH-Wert vorzugsweise auf 4,0 bis 7,0, besonders bevorzugt auf 5,5 bis 6,5 eingestellt.

Die mittlere Korngröße liegt zwischen 1 und 200 µm, vorzugsweise unter 20 µm, besonders bevorzugt bei 2 bis 10 µm. Der Festkörpergehalt der erfindungsgemäßen Slurry liegt insbesondere zwischen 20 und 50 %.

Der Dispersion können vor oder nach der Naßvermahlung bzw. dem Eintragen der trockenen festen Partikel in das Wasser 0 bis 5 Gew.% eines Entschäumergemisches, eines Ammonium- und/oder Alkalisalzes, eines carboxylfunktionellen oder nichtionischen Dispergierhilfsmittels, Netzmittels und/oder Verdickergemisches sowie der anderen Additive zugesetzt werden. Vorzugsweise werden erfindungsgemäß Entschäumer, Dispergierhilfs-, Netzund/oder Verdickungsmittel zunächst in Wasser dispergiert. Dann werden kleine Portionen der festen Partikel eingerührt. Anschließend werden noch einmal Entschäumer, Dispergierhilfs-, Verdickungs- und Netzmittel eindispergiert. Abschließend werden nochmals in kleinen Portionen feste Partikel eingerührt.

Die Einstellung des pH-Wertes erfolgt erfindungsgemäß vorzugsweise mit Aminen, besonders im Fall anionisch stabilisierter erfindungsgemäßer Slurries. Der pH-Wert kann hierbei zunächst ansteigen, daß eine stark basische Dispersion entsteht. Der pH-Wert fällt jedoch innerhalb mehrerer Stunden oder Tage wieder auf die oben angeführten Werte.

Es sind aber auch die in der oben beschriebenen Weise kationisch stabilisierte Dispersionen möglich, bei denen die Einstellung des ph-Wertes mit Säuren, bevorzugt leichtflüchtigen Carbonsäuren, erfolgt. Besonders geeignet sind auch doppelbindungsfreie Bindemittel laut z. B. DE 44 13 436 und/oder DE 196 00 147 die mit Anteilen von (Meth) Acrylsäure polymerisiert wurden und die dann ganz oder zum Teil mit Stickstoffbasen neutralisiert wurden. Auch die Verwendung bindemittelähnlicher Dispergatoren, die basische Gruppen aufweisen und mit Säuren (teil)neutralisiert wurden, ist von Vorteil. Ein Vorzug der vorliegenden Erfindung besteht darin, sowohl kationische als auch anionische Stabilisierungen frei wählen zu können und z. B. das kostengünstigste oder chemisch leicht durchzuführende Prinzip wählen zu können, ohne, daß auf die Chemie der Vernetzungsreaktion Rücksicht genommen werden muß. So sind z. B. die Bindemittel nach DE 44 13 436 und DE 196 00 147 gegen die meisten chemischen Reaktionen inert und werden nur durch energiereiche Bestrahlung vernetzt. Solche Systeme lassen sich dann durch konventionelle Powderslurryverfahren auf verschiedene Substrate auftragen und bei höherer Temperatur (oberhalb der Schmelztemperatur des Harzes) durch UV- oder Elektronenstrahlung härten.

Die erfindungsgemäße Slurry kann indes auch hergestellt werden, indem ionisch stabilisierbare Bindemittel und die Vernetzungsmittel sowie gegebenenfalls die Additive und Reaktivverdünner in organischer Lösung gemischt und zusammen mit Hilfe von Neutralisationsmitteln in Wasser nach dem Sekundärdispersionsverfahren dispergiert werden. Sodann wird mit Wasser unter Rühren verdünnt. Es bildet sich zunächst eine Wasser-in-Öl-Emulsion aus. die bei weiterer Verdünnung in eine Öl-in-Wasser-Emulsion umschlägt. Dieser Punkt wird im allgemeinen bei Festkörpergehalten von < 50 Gew.-%, bezogen auf die Emulsion, erreicht und ist äußerlich an einem stärkeren Abfall der Viskosität während der Verdünnung erkennbar.

Die so erhaltene, noch lösemittelhaltige Emulsion wird anschließend durch azeotrope Destillation von Lösemitteln befreit.

Die Destillationstemperatur richtet sich in erster Linie nach der Glasübergangstemperatur Tg der Bindemittel. Um Koagulate, d.h. ein Verfließen der Partikel zu einer separaten kontinuierlichen organischen Phase, während der Destillation zu vermeiden, ist es wesentlich, die Destillationstemperatur unterhalb der Glasübergangstemperatur Tg zu halten. Die Glasübergangstemperatur ist ersatzweise auch über die Mindestfilmbildetemperatur der Dispersion beschreibbar. Die Mindestfilmbildetemperatur kann ermittelt werden. indem die Dispersion mittels einer Rakel auf eine Glasplatte aufgezogen und auf einem Gradientenofen erwärmt wird. Die Temperatur, bei der die pulverförmige Schicht verfilmt, wird als Mindestfilmbildetemperatur bezeichnet.

Erfindungsgemäß ist es von Vorteil, wenn die Mindestfilmbildetemperatur mehr als 20 °C, insbesondere mehr als 30 °C beträgt.

Erfindungsgemäß ist es von Vorteil, wenn die zu entfernenden Lösemittel bei einer Destillationstemperatur unterhalb 70 °C, bevorzugt unterhalb 50 °C und insbesondere unterhalb 40 °C abdestilliert werden. Gegebenenfalls wird der Destillationsdruck hierbei so gewählt, daß bei höhersiedenden Lösemitteln dieser Temperaturbereich eingehalten wird.

Im einfachsten Fall kann die azeotrope Destillation dadurch bewerkstelligt werden, daß man die Emulsion bei Raumtemperatur im offenen Gefäß während mehrerer Tage rührt. Im bevorzugten Fall wird die lösemittelhaltige Emulsion in einer Vakuumdestillation von den Lösemitteln befreit.

Die abgedunstete oder abdestillierte Menge an Wasser und Lösemitteln werden zur Vermeidung von hohen Viskositäten durch Wasser ersetzt. Die Zugabe des Wassers kann vorher, nachher oder auch während des Abdunstens oder der Destillation durch portionsweise Zugabe erfolgen.

Nach Verlust der Lösemittel steigt die Glasübergangstemperatur Tg der dispergierten Teilchen an, und es bildet sich anstelle der bisherigen lösemittelhaltigen Emulsion (flüssig-in-flüssig-Dispersion) eine fest-in-flüssig-Dispersion - die erfindungsgemäße Slurry - aus.

Zur Herstellung der erfindungsgemäßen Klarlacke wird die erfindungsgemäße Slurry auf das zu beschichtende Substrat appliziert, Hierbei brauchen keine besonderen Maßnahmen ergriffen zu werden, sondern die Applikation kann nach den üblichen und bekannten Verfahren, beispielsweise nach dem bei der Automobilerstlackierung angewandten Naß-in-naß-Verfahren, erfolgen, was ein weiterer besonderer Vorteil der erfindungsgemäßen Slurry ist.

Noch ein weiterer besonderer Vorteil der erfindungsgemäßen Slurry liegt darin, daß sie nicht nur für die Herstellung von einschichtigen Klarlackierungen, sondern auch von mehrschichtigen Klarlackierungen geeignet ist, wobei sie vorzugsweise zur Herstellung der obersten Schicht verwendet wird. Zur Herstellung dieser mehrschichtigen Klarlackierungen kann sie mit allen üblichen und bekannten Klarlacken kombiniert werden. Die betreffenden mehrschichtigen Klarlackierungen weisen eine sehr gute Zwischenschichthaftung auf.

Als Substrate kommen alle zu lackierenden Oberflächen, die einer kombinierten Härtung unter Anwendung von Hitze und aktinischer Strahlung zugänglich sind in Betracht, das sind z. B. Metalle, Kunststoffe, Holz, Keramik, Stein, Textil, Faserverbunde, Leder, Glas, Glasfasern, Glas- und Steinwolle, mineral- und harzgebundene Baustoffe, wie Gips- und Zementplatten oder Dachziegel. Demnach ist die erfindungsgemäße Slurry auch für Anwendungen außerhalb der Automobillackierung geeignet, insbesondere für die Lackierung von Möbeln und die industrielle Lackierung, inklusive Coil Coating und Container Coating. Insbesondere ist die erfindungsgemäße Slurry als Überzug von Basislacken geeignet, vorzugsweise in der Automobilindustrie. Besonders geeignet ist sie als Klarlack über Wasserbasislacken auf Basis von Polyestern, Polyurethanharzen und Aminoplastharzen.

Nach ihrer Applikation trocknet die erfindungsgemäße Slurry problemlos auf und zeigt bei der Verarbeitungstemperatur, in der Regel bei Raumtemperatur, kein Verfilmen. D.h., die als Naßschicht applizierte erfindungsgemäße Slurry lüftet bei Raumtemperatur oder leicht erhöhten Temperaturen unter Wasserabgabe ab, ohne daß die darin enthaltenen Partikel ihre ursprüngliche feste Form verändern. Der pulverförmige feste Film läßt das Restwasser leichter Abdampfen als ein verfließender Naßfilm, Dadurch wird die Gefahr von im gehärteten Film eingeschlossenen Blasen von verdampftem Wasser ("Kochern") vermindert. Außerdem ist die Neigung zum "mudcracking" ausgesprochen gering. Überraschend ist hierbei der Befund, daß die erfindungsgemäßen Slurries eine umso geringere Neigung zu "mudcracking" haben, je höher ihre Partikelgrößen sind.

In dem nachfolgenden Härtungsschritt wird die nun weitgehend wasserfreie Pulverschicht geschmolzen und zur Vernetzung gebracht. In manchen Fällen kann es von Vorteil sein, den Verlaufsprozess und die Vernetzungsreaktion mit einem zeitlichen Versatz ablaufen zu lassen, indem ein Stufenheizprogramm oder eine sogenannte Aufheizrampe gefahren wird. Die geschmolzene Schicht wird dann durch Bestrahlen mit aktinischer Strahlung, insbesondere UV-Licht, gehärtet. Der Strahlenhärtung folgt eine thermische Härtung nach, bei der auch die substratnahen Bereiche der Klarlackschicht und/oder bei dreidimensionalen Objekten die Schattenbereiche vollständig ausgehärtet werden. Im allgemeinen wird die thermische Härtung bei Temperaturen zwischen 120 und 160 °C durchgeführt. Die entsprechende Einbrennzeit liegt zwischen 1 und 60 Minuten. Hierbei zeigt sich der besondere Vorteil der erfindungsgemäßen Slurry, nämlich daß sie über das Verhältnis von thermisch härtbaren Bestandteilen zu mit aktinischer Strahlung härtbaren Bestandteilen einfach und genau auf die thermische Belastbarkeit und/oder die dreidimensionale Gestalt des zu beschichtenden Substrats abgestimmt werden kann. So wird man bei einem dreidimensionalen Objekt, das große Schattenbereiche aufweist, den Schwerpunkt auf die thermische Härtung legen und die Strahlenhärtung nur für eine erste partielle Vernetzung anwenden. Handelt es sich dagegen um ein planares, thermisch nur wenig belastbares Substrat wird man in der Hauptsache die Strahlenhärtung anwenden. Zwischen diesen beiden Extremen ist jede Abstufung denkbar und auch ausführbar. Es ist indes erfindungsgemäß auch möglich. die thermische Härtung - zumindest teilweise - vor der Härtung mit aktinischer Strahlung durchzuführen oder beide Härtungsmethoden gleichzeitig anzuwenden. Desweiteren ist es erfindungsgemäß, die beiden Härtungsmethoden alternierend anzuwenden.

Mit dem erfindungsgemäßen Verfahren können Schichtdicken von 10 bis 60, vorzugsweise 20 bis 60, besonders bevorzugt 20 bis 50 µm, höchst bevorzugt 25 bis 45 µm erreicht werden. Lackierungen mit vergleichbarer Qualität konnten bisher nach dem Stand der Technik unter Einsatz von Pulverklarlacken nur durch Auftrag von Schichtdicken von 65 bis 80 µm erreicht werden.

Der hierbei resultierende Klarlack weist hervorragende anwendungstechnische Eigenschaften auf. So haftet der erfindungsgemäße Klarlack fest auf allen üblichen und bekannten Basislackschichten oder auf den vorstehend genannten Substraten. Er ist von hohem Glanz, glatt, kratzfest, witterungsbeständig und frei von Störungen.

**Beispiele 1 bis 3**

**Herstellung erfindungsgemäßer Pulverklarlack-Slurries**

Für die Herstellung der erfindungsgemäßen Pulverklarlack-Slurries wurde als thermisch härtbares Bindemittel ein epoxidgruppenhaltiges Polyacrylat verwendet, welches 23 Gew.-% Glycidylmethacrylat, 7 Gew.-% Ethylhexylacrylat. 47 Gew.-% Methylmethacrylat, 9 Gew.-% tert.-Butylcyclohexylacrylat und 14 Gew.-% Styrol einpolymerisiert enthielt.

Als UV-härtbares Bindemittel wurde das vorstehend genannte Bindemittel verwendet, dessen Epoxidgruppen vollständig mit Acrylsäure umgesetzt worden waren.

Als Vernetzungsmittel für die thermische Härtung wurde Dodecandicarbonsäure verwendet.

Als Photoinitiator wurde Irgacure® 2959 der Firma Ciba-Geigy verwendet.

Die Tabelle gibt eine Übersicht über die Zusammensetzung der festen Partikel der erfindungsgemäßen Pulverklarlack-Slurries 1 bis 3.

Tabelle 1:

| Die Zusammensetzung der festen Partikel der erfindungsgemäßen Pulverklarlack-Slurries | | | |
|---|---|---|---|
| **Bestandteil** | **Beispiel 1 (Gew.-Tle.)** | **Beispiel 2 (Gew.-Tle.)** | **Beispiel 3 (Gew.-Tle.)** |
| Epoxidharz | 63,6 | 42,4 | 21,2 |

## EP 1 165 702 B1

Tabelle 1:   (fortgesetzt)

| Die Zusammensetzung der festen Partikel der erfindungsgemäßen Pulverklarlack-Slurries | | | |
|---|---|---|---|
| Bestandteil | Beispiel 1 (Gew.-Tle.) | Beispiel 2 (Gew.-Tle.) | Beispiel 3 (Gew.-Tle.) |
| Dicarbonsäure | 11,4 | 7,6 | 3,8 |
| Acryliertes Harz | 25 | 50 | 75 |
| Photoinitiator | 1 | 2 | 3 |

Die festen Partikel der Beispiele 1 bis 3 wurden. wie in der deutschen Patentschrift DE-A-196 18 657 beschrieben, durch Extrusion der Bestandteile und Naßvermahlung der resultierenden Gemische hergestellt. Hierbei wurden den Gemischen noch ein Schutzkolloid (Copolymer von Vinylpyrrolidon und Vinylpropionat) zugesetzt. Die resultierenden erfindungsgemäßen Pulverklarlack-Slurries 1 bis 3 wiesen einen Gehalt an festen Partikeln von 45 Gew.-% auf.

Die erfindungsgemäßen Pulverklarlack-Slurries 1 bis 3 wurden mit Hilfe einer Becher-Spritzpistole auf Bonderbleche appliziert. Die resultierenden Naßschichten wurden während 5 Minuten bei 60 °C vorgetrocknet. Anschließend wurden die Schichten während 20 Minuten bei 140 °C thermisch gehärtet und danach während 10 Minuten mit einer 120W Quecksilberdampflampe belichtet.

Es resultierten harte, hoch glänzende, ausgesprochen glatte und chemikalienbeständige Klarlacke einer Stärke von 42 bis 43 μm.

Die Tabelle 2 gibt eine Übersicht über durchgeführten Untersuchungen und die hierbei erhaltenen Ergebnisse. Zur Prüfung der Chemikalienbeständigkeit wurden die Klarlacke definiert der Schädigung durch Chemikalien ausgesetzt. Diese wurden während 30 Minuten bei 60 °C einwirken gelassen. Nach 24 Stunden wurde visuell begutachtet, ob eine Schädigung, erkennbar an Flecken, eingetreten war.

Tabelle 2:

| Die Prüfung der Härte und der Chemikalienbeständigkeit | | | | | |
|---|---|---|---|---|---|
| Beispiel | Bleistifthärte | Chemikalienbeständigkeit bei 60 °C | | | |
| Nr. | (DIN 46 453) | $H_2SO_4$ 1%-ig | NaOH 1%-ig | Pankreatin | $H_2O$ |
| 1 | H-2H | - | - | - | + |
| 2 | 2H | - | - | + | + |
| 3 | 3H | - | + | + | + |
| -    = erkennbare Flecken | | | | | |
| +    = keine Flecken zu erkennen | | | | | |

Die Ergebnisse der Tabelle 2 untermauern die hohe Härte und Chemikalienbeständigkeit der erfindungsgemäßen Klarlacke.

**Patentansprüche**

1.  Thermisch und mit aktinischer Strahlung härtbare Pulverslurry mit

   (I) Bestandteilen, welche funktionelle Gruppen (A) enthalten, die sie mit aktinischer Strahlung härtbar machen, und Bestandteilen, welche komplementäre funktionelle Gruppen (B) enthalten, die sie thermisch härtbar machen, im Gewichtsverhältnis von 50 : 1 bis 1 : 50
und/oder mit

(II) Bestandteilen, welche die funktionellen Gruppen (A) und (B), die sie thermisch und mit aktinischer Strahlung härtbar machen, im molaren Verhältnis von 100 : 1 bis 1 : 100 enthalten.

2. Die Pulverslurry nach Anspruch 1, **dadurch gekennzeichnet, daß** sie einen Gehalt an festen Partikeln von 10 bis 60 Gew.-%, insbesondere 20 bis 50 Gew.-%, hat.

3. Die Pulverslurry nach Anspruch 1 oder 2, **dadurch gekennzeichnet, daß** die Bestandteile mit den funktionellen Gruppen (A) und die Bestandteile mit den funktionellen Gruppen (B) gemeinsam in den festen Partikeln vorliegen.

4. Die Pulverslurry nach Anspruch 1 oder 2, **dadurch gekennzeichnet, daß** die Bestandteile mit den funktionellen Gruppen (A) und die Bestandteile mit den funktionellen Gruppen (B) in voneinander verschiedenen festen Partikeln vorliegen.

5. Die Pulverslurry nach Anspruch 1 oder 2, **dadurch gekennzeichnet, daß** sie thermisch härtbare feste Partikel und mit aktinischer Strahlung härtbare Dispersionen und/oder Emulsionen enthält.

6. Die Pulverslurry nach Anspruch 1 oder 2, **dadurch gekennzeichnet, daß** sie thermisch härtbare feste Partikel und thermisch härtbare Dispersionen und/oder Emulsionen enthält.

7. Die Pulverslurry nach Anspruch 3 oder 4, **dadurch gekennzeichnet, daß** sie thermisch härtbare und/oder mit aktinischer Strahlung härtbare Dispersionen und/oder Emulsionen enthält.

8. Die Pulverslurry nach einem der Ansprüche 1 bis 7, **dadurch gekennzeichnet, daß** sie Polyacrylate, Polyester, Alkydharze, und/oder Polyurethane als thermisch härtbare Bindemittel und (meth)acrylfunktionelle (Meth)Acrylcopolymere, Polyetheracrylate, Polyesteracrylate, ungesättigte Polyester, Epoxyacrylate, Urethanacrylate, Aminoacrylate, Melaminacrylate und/oder Silikonacrylate und/oder die entsprechenden Methacrylate als mit aktinischer Strahlung härtbare Bindemittel enthalten.

9. Die Pulverslurry nach einem der Ansprüche 1 bis 8, **dadurch gekennzeichnet, daß** sie Vernetzungsmittel für die themische Härtung und Photoinitiatoren enthält.

10. Verfahren zur Herstellung einer thermisch und mit aktinischer Strahlung härtbaren Pulverslurry durch Vermischen ihrer Bestandteile in der Schmelze, Vermahlen der resultierenden Mischung zu festen Partikeln, gegebenenfalls gefolgt von der Naßvermahlung der festen Partikel, und Dispergieren der festen Partikel in einer wäßrigen Phase, **dadurch gekennzeichnet, daß** man hierbei

(I) Bestandteile, welche funktionelle Gruppen (A) enthalten, die sie mit aktinischer Strahlung härtbar machen, und Bestandteile, welche komplementäre funktionelle Gruppen (B) enthalten, die sie thermisch härtbar machen, und/oder

(II) Bestandteile, welche die funktionellen Gruppen (A) und (B) enthalten, die sie thermisch und mit aktinischer Strahlung härtbar machen

verwendet.

11. Verfahren zur Herstellung einer strukturviskosen, thermisch und mit aktinischer Strahlung härtbaren Pulverslurry durch

1) Emulgieren einer organischen Lösung, enthaltend

(1.1) thermisch härtbare Bestandteile und

(1.2) mit aktinischer Strahlung härtbare Bestandteile und/oder

(1.3) thermisch und mit aktinischer Strahlung härtbare Bestandteile
wodurch eine Emulsion vom Typ Öl-in-Wasser resultiert,

2) Entfernen des organischen Lösemittels oder der organischen Lösemittel und

3) teilweisen oder völligen Ersatz des entfernten Lösemittelvolumens durch Wasser, wodurch eine Pulverklarlack-Slurry mit festen sphärischen Partikeln resultiert,
    **dadurch gekennzeichnet, daß** der Pulverslurry

4) noch mindestens ein ionischer, insbesondere anionischer, Verdicker und mindestens ein nicht ionischer
Assoziativ-Verdicker zugesetzt wird.

**12.** Das Verfahren nach Anspruch 11, **dadurch gekennzeichnet, daß** man hierbei mit Wasser mischbare organische
Lösemittel verwendet.

**13.** Das Verfahren nach Anspruch 11 oder 12, **dadurch gekennzeichnet, daß** man die organischen Lösemittel bei
Temperaturen entfernt, welche unterhalb der Glastemperatur Tg der Bindemittel liegt.

**14.** Verwendung der Pulverslurry gemäß einem der Ansprüche 1 bis 9 oder der gemäß einem der Ansprüche 10 bis
13 hergestellten Pulverslurry für die Herstellung von Klarlacken für die Automobilerst- und die Automobilreparaturlackierung, die industrielle Lackierung, inclusive Coil Coating und Container Coating, und die Möbellackierung.

**15.** Klarlack, hergestellt aus der Pulverslurry gemäß einem der Ansprüche 1 bis 9 oder der gemäß einem der Ansprüche 10 bis 13 hergestellten Pulverslurry.

**16.** Verwendung des Klarlacks gemäß Anspruch 15 für die Herstellung einoder mehrschichtiger Klarlackierungen in
der Automobilerst- und der Automobilreparaturlackierung und der industriellen Lackierung.

**17.** Formteile, insbesondere aus Metall, Glas, Holz und/oder Kunststoff, welche mit einer ein- oder mehrschichtigen
Klarlacklackierung beschichtet sind, **dadurch gekennzeichnet, daß** die oder mindestens eine der Klarlackschicht
(en) aus dem Klarlack gemäß Anspruch 15 hergestellt worden ist.

**Claims**

**1.** A powder slurry curable thermally and with actinic radiation, comprising

(I) constituents containing functional groups (A) which render them curable with actinic radiation, and constituents containing complementary functional groups (B) which render them curable thermally, in a weight ratio
of from 50:1 to 1:50.
and/or

(II) constituents containing the functional groups (A) and (B) which render them curable thermally and with
actinic radiation in a molar ratio of from 100:1 to 1:100.

**2.** The powder slurry as claimed in claim 1, having a solid particles content of from 10 to 60% by weight, in particular
from 20 to 50% by weight.

**3.** The powder slurry as claimed in claim 1 or 2, wherein the constituents containing the functional groups (A) and
the constituents containing the functional groups (B) are present together in the solid particles.

**4.** The powder slurry as claimed in claim 1 or 2, wherein the constituents containing the functional groups (A) and
the constituents containing the functional groups (B) are present in solid particles that are different from one another.

**5.** The powder slurry as claimed in claim 1 or 2, comprising thermally curable solid particles and emulsions and/or
dispersions curable with actinic radiation.

**6.** The powder slurry as claimed in claim 1 or 2, comprising thermally curable solid particles and thermally curable dispersions and/or emulsions.

7. The powder slurry as claimed in claim 3 or 4, comprising emulsions and/or dispersions curable thermally and/or curable with actinic radiation.

8. The powder slurry as claimed in any of claims 1 to 7, comprising polyacrylates, polyesters, alkyd resins, and/or polyurethanes as thermally curable binders and (meth)acryloyl-functional (meth)-acrylic copolymers, polyether acrylates, polyester acrylates, unsaturated polyesters, epoxy acrylates, urethane acrylates, amino acrylates, melamine acrylates and/or silicone acrylates and/or the corresponding methacrylates as binders curable with actinic radiation.

9. The powder slurry as claimed in any of claims 1 to 8, comprising crosslinking agents for the thermal curing and photoinitiators.

10. A process for preparing a powder slurry curable thermally and with actinic radiation by mixing of its constituents in the melt, milling of the resulting mixture to give solid particles, followed if desired by the wet milling of the solid particles, and dispersion of the solid particles in an aqueous phase, which involves using

   (I) constituents containing functional groups (A) which render them curable with actinic radiation, and constituents containing complementary functional groups (B) which render them curable thermally, and/or
   (II) constituents containing the functional groups (A) and (B) which render them curable thermally and with actinic radiation.

11. A process for preparing a pseudoplastic powder slurry curable thermally and with active radiation by

   1) emulsification of an organic solution comprising

      1.1) thermally curable constituents and

      1.2) constituents curable with actinic radiation and/or

      1.3) constituents curable thermally and with actinic radiation

   to give an emulsion of the oil-in-water type,

   2) removal of the organic solvent or the organic solvents, and

   3) partial or complete replacement of the solvent volume removed by water, to give a powder slurry comprising solid spherical particles, wherein the powder slurry is further admixed with

   4) at least one ionic, especially anionic, thickener and at least one nonionic associative thickener.

12. The process as claimed in claim 11, wherein water-miscible organic solvents are used.

13. The process as claimed in claim 11 or 12, wherein the organic solvents are removed at temperatures below the glass transition temperature Tg of the binders.

14. The use of the powder slurry as claimed in any of claims 1 to 9 or of the powder slurry prepared as claimed in any of claims 10 to 13 to prepare clearcoat materials for automotive OEM finishing and automotive refinish, industrial coating, including coil coating and container coating, and furniture coating.

15. A clearcoat material prepared from the powder slurry as claimed in any of claims 1 to 9 or the powder slurry prepared as claimed in any of claims 10 to 13.

16. The use of the clearcoat material as claimed in claim 15 to produce single-coat or multicoat clearcoat systems in automotive OEM finishing and automotive refinish and in industrial coating.

17. A shaped part, in particular of metal, glass, wood and/or plastic, which is coated with a single-coat or multicoat clearcoat system, wherein the clearcoat film or at least one of the clearcoat films has been produced from the clearcoat material as claimed in claim 15.

**Revendications**

1.  Suspension de poudre durcissable thermiquement et par un rayonnement actinique, comportant

    (I) des composants contenant des groupes fonctionnels (A) qui les rendent durcissables par un rayonnement actinique, et des composants contenant des groupes fonctionnels (B) qui les rendent durcissables thermiquement, en un rapport pondéral de 50:1 à 1:50
    et/ou comportant

    (II) des composants contenant les groupes fonctionnels (A) et (B) qui les rendent durcissables thermiquement et par un rayonnement actinique, en un rapport molaire de 100:1 à 1:100.

2.  Suspension de poudre selon la revendication 1, **caractérisée en ce qu'**elle a une teneur en particules solides de 10 à 60 % en poids, en particulier de 20 à 50 % en poids.

3.  Suspension de poudre selon la revendication 1 ou 2, **caractérisée en ce que** les composants comportant les groupes fonctionnels (A) et les composants comportant les groupes fonctionnels (B) sont présents ensemble dans les particules solides.

4.  Suspension de poudre selon la revendication 1 ou 2, **caractérisée en ce que** les composants comportant les groupes fonctionnels (A) et les composants comportant les groupes fonctionnels (B) sont présents ensemble dans des particules solides différentes les unes des autres.

5.  Suspension de poudre selon la revendication 1 ou 2, **caractérisée en ce qu'**elle contient des particules solides durcissables thermiquement et des dispersions et/ou émulsions durcissables par un rayonnement actinique.

6.  Suspension de poudre selon la revendication 1 ou 2, **caractérisée en ce qu'**elle contient des particules solides durcissables thermiquement et des dispersions et/ou émulsions durcissables thermiquement.

7.  Suspension de poudre selon la revendication 3 ou 4, **caractérisée en ce qu'**elle contient des dispersions et/ou émulsions durcissables thermiquement et/ou durcissables par un rayonnement actinique.

8.  Suspension de poudre selon l'une quelconque des revendications 1 à 7, **caractérisée en ce qu'**elle contient en tant que liants durcissables par un rayonnement actinique des polyacrylates, des polyesters, des résines alkyde et/ou des polyuréthannes en tant que liants thermodurcissables et des copolymères (méth)acryliques à fonction (méth)-acryloyle, des polyétheracrylates, des polyesteracrylates, des polyesters insaturés, des époxyacrylates, des uréthanne-acrylates, des aminoacrylates, des mélamine-acrylates et/ou des siliconeacrylates et/ou les méthacrylates correspondants.

9.  Suspension de poudre selon l'une quelconque des revendications 1 à 8, **caractérisée en ce qu'**elle contient des agents de réticulation pour le durcissement thermique et des photoamorceurs.

10. Procédé pour la préparation d'une suspension de poudre durcissable thermiquement et par un rayonnement actinique, par mélange de ses composants dans la masse fondue, broyage en fines particules du mélange résultant, éventuellement suivi du broyage par voie humide des particules solides, et dispersion des particules solides dans une phase aqueuse, **caractérisé en ce que** dans ce procédé on utilise

    (I) des composants contenant des groupes fonctionnels (A) qui les rendent durcissables par un rayonnement actinique, et des composants contenant des groupes fonctionnels (B) complémentaires qui les rendent durcissables thermiquement, et/ou

    (II) des composants contenant les groupes fonctionnels (A) et (B), qui les rendent durcissables thermiquement et par un rayonnement actinique.

**11.** Procédé pour la préparation d'une suspension de poudre à viscosité intrinsèque, durcissable thermiquement et par un rayonnement actinique, par

1) émulsification d'une solution organique contenant

1.1) des composants durcissables thermiquement et

1.2) des composants durcissables par un rayonnement actinique et/ou

1.3) des composants durcissables thermiquement et par un rayonnement actinique
d'où il résulte une émulsion du type huile-dans-eau,

2) élimination du solvant organique ou des solvants organiques et

3) remplacement partiel ou total par de l'eau du volume de solvant éliminé, d'où il résulte une suspension de vernis en poudre comportant des particules solides sphériques,
**caractérisé en ce qu'**on ajoute encore à la suspension de poudre

4) au moins un épaississant ionique, en particulier anionique, et au moins un épaississant associatif non ionique.

**12.** Procédé selon la revendication 11, **caractérisé en ce qu'**on utilise dans ce procédé des solvants organiques miscibles à l'eau.

**13.** Procédé selon la revendication 11 ou 12, **caractérisé en ce qu'**on élimine les solvants organiques à des températures qui sont inférieures à la température de transition vitreuse $T_v$ des liants.

**14.** Utilisation de la suspension de poudre selon l'une quelconque des revendications 1 à 9 ou de la suspension de poudre préparée selon l'une quelconque des revendications 10 à 13, pour la préparation de vernis pour le premier peinturage d'automobiles et le peinturage de réparation d'automobiles, le peinturage industriel, y compris le peinturage de rubans en continu (*coil coating*) et le peinturage de récipients *(container coating)*, et le peinturage de meubles.

**15.** Vernis préparé à partir de la suspension de poudre selon l'une quelconque des revendications 1 à 9 ou de la suspension de poudre préparée selon l'une quelconque des revendications 10 à 13.

**16.** Utilisation du vernis selon la revendication 15, pour la production de revêtements de vernis mono- ou multicouches dans le premier peinturage d'automobiles et le peinturage de réparation d'automobiles et dans le peinturage industriel.

**17.** Pièces moulées, en particulier à base de métal, verre, bois et/ou matière plastique, qui sont enduites d'un revêtement de vernis mono- ou multicouche, **caractérisées en ce que** la couche de vernis ou au moins l'une des couches de vernis a été produite à partir du vernis selon la revendication 15.